# EUROPÄISCHE PATENTSCHRIFT

(11) **EP 3 278 529 B1**
(45) Veröffentlichungstag und Bekanntmachung des Hinweises auf die Patenterteilung: **06.05.2020**
(21) Anmeldenummer: 16713321.4
(22) Anmeldetag: 15.03.2016
(51) Int. Cl.: H04L 29/06, H04L 12/40, H04L 29/08

(54) **ANGRIFFSERKENNUNGSVERFAHREN, ANGRIFFSERKENNUNGSVORRICHTUNG UND BUSSYSTEM FÜR EIN KRAFTFAHRZEUG**
ATTACK DETECTION METHOD, ATTACK DETECTION DEVICE AND BUS SYSTEM FOR A MOTOR VEHICLE
PROCÉDÉ DE DÉTECTION D'ATTAQUE, DISPOSITIF DE DÉTECTION D'ATTAQUE ET SYSTÈME DE BUS POUR UN VÉHICULE AUTOMOBILE

(30) Priorität: 30.03.2015 DE 102015205670
(43) Veröffentlichungstag der Anmeldung: 07.02.2018
(73) Patentinhaber: Volkswagen Aktiengesellschaft, 38440 Wolfsburg (DE)
(72) Erfinder: HARTKOPP, Oliver, 38436 Wolfsburg (DE); MOOS, Thorben, 44787 Bochum (DE)
(86) Internationale Anmeldenummer: PCT/EP2016/055610
(87) Internationale Veröffentlichungsnummer: WO 2016/156034

(56) Entgegenhaltungen:
- WO-A1-2013/093591
- US-A1- 2014 250 531
- ULF E LARSON ET AL: "An approach to specification-based attack detection for in-vehicle networks", INTELLIGENT VEHICLES SYMPOSIUM, 2008 IEEE, IEEE, PISCATAWAY, NJ, USA, 4. Juni 2008 (2008-06-04), Seiten 220-225, XP031318908, ISBN: 978-1-4244-2568-6
- MICHAEL MUTER ET AL: "Entropy-based anomaly detection for in-vehicle networks", INTELLIGENT VEHICLES SYMPOSIUM (IV), 2011 IEEE, IEEE, 5. Juni 2011 (2011-06-05), Seiten 1110-1115, XP031999062, DOI: 10.1109/IVS.2011.5940552 ISBN: 978-1-4577-0890-9

## Beschreibung

Die Erfindung betrifft ein Angriffserkennungsverfahren für ein Bussystem eines Kraftfahrzeugs, eine Angriffserkennungsvorrichtung für ein Bussystem eines Kraftfahrzeugs und ein Bussystem für ein Kraftfahrzeug.

Kraftfahrzeuge haben in den letzten Jahrzehnten neben rein mechanischen Komponenten immer mehr elektronische Komponenten erhalten. Diese elektronischen Komponenten können auch eingebettete Computer enthalten. Elektronische Komponenten sind bspw. Sensoreinheiten zur Messung von Geschwindigkeit, Drehzahl, etc., Steuergeräte (Antiblockiersystem, Fahrdynamikregelung, Motorsteuergerät, etc.), Multimediaeinheiten (Radio, CD-Spieler, Navigationsgerät, etc.) und dergleichen.

Für die Kommunikation derartiger elektronischer Komponenten in einem Kraftfahrzeug sind verschiedene Bussysteme bekannt, wie bspw. der sehr bekannte und weit verbreitete CAN-Bus (Controller Area Network). Daneben gibt es aber auch andere Bussysteme, die ebenfalls im Automobilbau Anwendung finden, wie LIN (Local Interconnect Network), FlexRay, MOST (Media Oriented Systems Transport), PSI5 (Peripheral Sensor Interface 5), das aus dem Computerbereich bekannte Ethernet und dergleichen.

Bussysteme im Kraftfahrzeugbereich gelangen zunehmend in den Fokus von Hackerangriffen und den Versuchen, Inhalte auf CAN- oder anderen Netzwerken vorsätzlich zu manipulieren. Solche Hackerangriffen auf das Bussystem geschehen typischerweise durch Zugriff auf eine sogenannte OBD-Buchse (On Board Diagnose) oder durch eine direkte physikalische Verbindung mit den Leitungen des Bussystems.

Die Cyber-Sicherheit von Fahrzeugen wird in den Medien und in den Entwicklerkreisen diskutiert. Bei der SAE ("Society of Automotive Engineers") existiert bereits eine Arbeitsgruppe, die sich mit der Cyber-Sicherheit von Fahrzeugen beschäftigt und aktuelle Entwicklungen bei Manipulationen von Fahrzeugelektronik beobachtet und nach Möglichkeiten zu deren Verhinderung sucht.

Es sind verschiedene Lösungen im Stand der Technik bekannt, um Hackerangriffe auf ein Bussystem, z.B. CAN-Bus, zu erkennen, einzudämmen bzw. zu verhindern.

Zum Beispiel ist es bekannt, eine Art Firewall in den CAN-Bus zu integrieren, sodass bspw. ein Hackerangriff über die OBD-Buchse oder ein Infotainment auf sensible Steuergeräte (Fahrwerk, Lenkung oder dergleichen) aufgrund der Firewall verhindert wird. Allerdings kann die Firewall bspw. durch eine Kontaktierung der Busleitung nach der Firewall umgangen werden.

Eine andere Alternative ist es, den Nachrichtenverkehr auf dem Bus zu verschlüsseln, wobei solche Konzepte durch den Einsatz von Verschlüsselungstechniken aufwendig und teuer sind und zusätzliche Rechenzeit benötigen.

Ferner können bestimmte Spezifikation für das Bussystem vorgesehen und geheim gehalten werden ("Security by Obscurity"), wie z.B. ein sogenanntes "CAN-ID Hopping" oder dergleichen, sodass ein potentieller Angriff erkennbar ist, da er sich nicht an diese geheime Spezifikation hält. Nachteilig hieran ist, dass eine absolute Geheimhaltung schwer zu erreichen ist und bei Bruch der Geheimhaltung die Sicherheit nicht mehr gewährleistet ist.

Beim CAN-Bus sind auch CRC-basierte Verfahren bekannt, bei dem über Prüfsummen manipulierte Nachrichten erkannt werden können. Außerdem sind eine kryptographische Authentisierung von CAN-Nachrichten (z.B. MaCAN Konzept) und dergleichen bekannt. Auch solche Verfahren sind vergleichsweise aufwendig und teuer.

Grundsätzlich sind sogenannte Angriffserkennungssysteme, die auch "Intrusion Detection Systems" ("IDS") genannt werden, bekannt. Im Computer- bzw. Gridbereich zeigen beispielhaft die beiden US-Patente US 8,561,167 B2 bzw. US 8,712,596 B2 die Anwendung von IDS zum Erkennen von bösartigen Angriffen.

Der Artikel Ulf E. Larson et al.: "An Approach to Specification-based Attack Detection for In-Vehicle Networks", 2008 IEEE Intelligent Vehicles Symposium, Eindhoven, 4. Juni 2008, Seiten 220-225 (doi: 10.1109/IVS.2008.4621263, ISBN: 978-1-4244-2568-6) beschreibt die Anwendbarkeit eines spezifikationsbasierten Ansatzes zur Detektion von Cyberattacken im Fahrzeugnetzwerk. Dazu sind Informationen zur Erstellung von Sicherheitsspezifikationen für die Kommunikation und das Verhalten elektronischer Steuergeräte auf Grundlage des Kommunikationsprotokolls und der Objektverzeichnissektionen nach CANopen draft standard 3.01 offenbart. Außerdem werden eine Sammlung beispielhafter Spezifikationen und ein geeigneter Ort für den Angriffsdetektor vorgeschlagen und die Detektion wird mithilfe mehrerer Angriffshandlungen bewertet.

Die internationale Offenlegungsschrift WO 2013/093591 A1 offenbart ein Fahrzeugnetzwerk mit einem zur Überwachung bestimmten und im Fahrzeug enthaltenen Steuergerät, das verbotene Daten durch Überwachung eines Datenkommunikationsformates detektiert. Das Datenkommunikationsformat wird verwendet, um ein im Fahrzeugnetzwerk verwendetes Kommunikationsprotokoll zu betreiben. Wenn das zur Überwachung bestimmte und im Fahrzeug enthaltene Steuergerät verbotene Daten detektiert, deren Kommunikationsformat anders als das vorgegebene Kommunikationsformat ist, führt es einen Prozess aus, um eine Alarminformation an im Fahrzeug enthaltene Steuergeräte zu übermitteln, und führt auch einen Prozess aus, um Gateways zu verbieten, die verbotenen Daten weiterzuleiten.

Im Bereich des CAN-Busses ist es außerdem bekannt, Angriffe mit selbstlernenden Algorithmen zu erkennen, die Anomalien im Nachrichtenverkehr erkennen können, indem sie bspw. ein aktuelles Nachrichtenaufkommen mit einem durchschnittlichen Aufkommen vergleichen, welches sie in der Vergangenheit "gelernt" haben. Auch neuronale Netzwerke werden dafür eingesetzt. Nachteilig an solchen Verfahren ist, dass nicht der Grund für die Anomalie erkannt wird. Ist zum Beispiel das Fahrzeug in einem instabilen Ausnahmefahrzustand, ist auch das Nachrichtenaufkommen in dem CAN-Bus ungewöhnlich hoch. Dies würde von einem solchen Algorithmus fälschlicherweise als eine Anomalie erkannt, die auf einem Angriff beruht und nicht auf einem ungewöhnlichen Fahrzustand. Derartige Falschmeldung werden auch als "False Positives" bezeichnet.

Insgesamt hat der Stand der Technik den Nachteil, dass ein hoher Aufwand für Hardware und/oder Software notwendig ist, wobei die Genauigkeit bei der Erkennung echter Angriffe auf das Fahrzeugnetzwerk nicht optimal ist. Wie erwähnt, können daher Fahrzeugzustände, die im Grenzbereich erreicht werden, zu einer fehlerhaften Erkennung eines Angriffs führen, was theoretisch zur Abschaltung wichtiger Funktionen des Fahrzeugs führen könnte.

Aufgabe der vorliegenden Erfindung ist es, ein Angriffserkennungsverfahren, eine Angriffserkennungsvorrichtung und ein Bussystem für ein Kraftfahrzeug bereitzustellen, welche die oben genannten Nachteile wenigstens teilweise überwinden.

Diese Aufgabe wird durch das erfindungsgemäße Angriffserkennungsverfahren nach Anspruch 1, die Angriffserkennungsvorrichtung nach Anspruch 12 und das Bussystem für ein Kraftfahrzeug nach Anspruch 13 gelöst.

Weitere vorteilhafte Aspekte der Erfindung ergeben sich aus den Unteransprüchen und der folgenden Beschreibung bevorzugter Ausführungsbeispiele der vorliegenden Erfindung.

Manche Ausführungsbeispiele betreffen ein Angriffserkennungsverfahren für ein Bussystem eines Kraftfahrzeugs, wobei für das Bussystem Kommunikationsregeln für das Senden von Nachrichten festgelegt sind. Das Angriffserkennungsverfahren umfasst:
Empfangen von Nachrichten, die über das Bussystem geschickt werden; und
Analysieren, ob die empfangenen Nachrichten gemäß den Kommunikationsregeln empfangen werden.

Das Bussystem für das Kraftfahrzeug kann grundsätzlich ein beliebiges, bekanntes Bussystem sein, wie der weit verbreitete CAN-Bus (Controller Area Network). Daneben gibt es aber auch andere Bussysteme, die ebenfalls im Automobilbau Anwendung finden, wie die eingangs erwähnten LIN (Local Interconnect Network), FlexRay, MOST (Media Oriented Systems Transport), PSI5 (Peripheral Sensor Interface 5), das aus dem Computerbereich bekannte Ethernet und dergleichen.

Im Folgenden wird die Erfindung, ohne dass sie darauf beschränkt ist, im Wesentlichen unter Bezug auf den CAN-Bus beschrieben. Allerdings sind die im Folgenden beschriebenen Ausführungsbeispiele auch für andere Bussysteme, wie sie beispielhaft oben genannt sind, anwendbar.

Die Kommunikationsregeln sind bspw. in einer Spezifikation für das Bussystem festgelegt, bspw. in Form eines Kommunikationsprotokolls oder dergleichen. Im Automobilbereich ist es üblich, dass für das verwendete Bussystem eine (oftmals vertrauliche) Spezifikation vorgesehen ist, in der das Kommunikationsverhalten für das Bussystem und der damit verbundenen Einheiten festgelegt (spezifiziert) ist. Diese gilt auch für den CAN-Bus, für den es entsprechende CAN-Spezifikationen gibt, wie es auch dem Fachmann bekannt ist. Da solche Spezifikationen dem Fachmann grundsätzlich bekannt und für ihn zugänglich sind, wird im Folgenden auf eine detaillierte Beschreibung solcher Spezifikationen verzichtet.

Das Bussystem selbst weist physikalische Leitungen auf, die bspw. als Kupferleitungen oder Glasfasern oder dergleichen ausgestaltet sind, die im Fahrzeug entsprechend verlegt sind und an die Einheiten ("Busteilnehmer") angeschlossen sind. Das Bussystem kann grundsätzlich jede Art von Topologie haben (ringförmig, sternförmig, linear oder Mischformen oder dergleichen). Beim CAN-Bus ist es vorteilhaft als beidseitig terminierte Linienstruktur aufgebaut.

Über das Bussystem werden von den daran angeschlossenen Busteilnehmern (z.B. Steuergeräte, Schalter, Infotainmentsysteme, Navigationssysteme, Multimediageräte und dergleichen), Nachrichten bspw. in Form von Nachrichtensignalen übermittelt. Solche Nachrichten können eine ID, also eine eindeutige Kennung enthalten, die bspw. eindeutig einem Sender zugeordnet ist, und sie können einen sogenannten Nutzinhalt ("Payload") aufweisen. Die Nachrichten können auch, wie es beim CAN-Bus typischerweise der Fall ist, einen sogenannten "Objekt-Identifier" aufweisen, der den Inhalt der Nachricht kennzeichnet (beim CAN-Bus werden die Nachrichten auch als Telegramme bezeichnet). Dabei kann ein Sender unterschiedliche Nachrichten mit unterschiedlichen Objekt-Identifiern aussenden und die am Bussystem angeschlossenen Empfänger entscheiden anhand des Objekt-Identifiers, ob die Nachricht für sie relevant ist oder nicht. Bei manchen Ausführungsbeispielen ist beim CAN-Bus als Einschränkung vorgesehen, dass zwar ein Sender unterschiedliche Nachrichten mit unterschiedlichen Objekt-Identifiern aussenden darf, aber dass es immer nur einen Sender für einen bestimmten Objekt-Identifier gibt. Dies erlaubt eine Arbitrierung von Nachrichten, wie es dem Fachmann bspw. für den CAN-Bus bekannt ist.

Bei manchen Ausführungsbeispielen existiert bspw. eine sogenannte Kommunikationsmatrix, die auch Bestandteil der Kommunikationsregeln für das Bussystem sein kann, wobei in der Kommunikationsmatrix bspw. alle Objekt-Identifier mit den zugehörigen Sendern und Empfängern festgelegt sind.

Das Angriffserkennungsverfahren umfasst nun weiter das Empfangen von Nachrichten, die über das Bussystem geschickt (versendet) werden. Dabei können bspw. alle Nachrichten, die über das Bussystem geschickt werden empfangen werden oder nur ein Teil der Nachrichten. Das Empfangen der Nachrichten kann dabei grundsätzlich zentral geschehen, wie es typischerweise bei einer netzwerkbasierten Implementierung des Angriffserkennungsverfahrens der Fall ist, oder auch dezentral z.B. in jedem Busteilnehmer, wie es bei einer sogenannten host-basierten Implementierung des Angriffserkennungsverfahrens der Fall ist oder über Mischformen aus zentralem und host-basiertem Empfang.

Außerdem umfasst das Angriffserkennungsverfahren das Analysieren, ob die empfangenen Nachrichten gemäß den Kommunikationsregeln empfangen werden.

Da die Kommunikationsregeln bekannt sind und das Kommunikationsverhalten für das Bussystem vorschreiben, kann eine Abweichung von den Kommunikationsregeln auf einen Angriffsversuch oder bspw. eine Fehlfunktion eines Busteilnehmers hinweisen. Eine solche Angriffserkennung wird auch als "Intrusion Detection" bezeichnet und eine zugehörige Vorrichtung oder ein zugehöriges Programm auch als "Intrusion Detection System".

Bei manchen Ausführungsbeispielen werden die exakten Kommunikationsregeln mittels entsprechender Algorithmen, neuronaler Netzwerke oder dergleichen erlernt, wobei die grundsätzlichen für das Bussystem verwendeten Kommunikationsprotokolle, wie bspw. OSEK-COM, AUTOSAR SWS COM, vorgegeben werden.

Vorteilhafterweise ist durch das erfindungsgemäße Angriffserkennungsverfahren keine Anlernphase nötig, wie es bspw. mit dem im Stand der Technik selbstlernenden Algorithmen notwendig ist. Außerdem kann das vorliegende Verfahren, da die Kommunikationsregeln bekannt und typischerweise auch unveränderbar sind, fest in einem Programm codiert werden, wodurch bspw. eine effiziente Realisierung in einem Embedded System möglich ist. Insgesamt ist mit dem Verfahren auch eine hohe Genauigkeit bei der Erkennung von Angriffsversuchen verbunden, d.h. es ist theoretisch eine Rate von 0% an Falschmeldungen ("False-Positives") möglich. Ferner hilft einem potentiellen Angreifer die Kenntnis über das Angriffserkennungsverfahren nicht weiter, da auch Umgehungsversuche der vorliegenden Erfindung durch einen Angreifer aufgrund der notwendigen Abweichung von den vorgeschriebenen Kommunikationsregeln erkannt werden. Daher ist die Erfindung prozesssicher aus existierenden Kommunikationsregeln, wie vertraulichen OEM-Spezifikationen für ein entsprechendes Bussystem, generierbar. Die geringe Rate von Fehlerkennung ermöglicht auch bei manchen Ausführungsbeispielen den Einsatz eines solchen Angriffserkennungsverfahren zur Abschaltung von sicherheitskritischen Funktionen (z.B. die Eigensicherheit betreffend) bei der Erkennung eines (Hacker-)Angriffs. Die hohe und robuste Erkennungsleistung kann auch für Service-Zwecke genutzt werden, um vorherige Manipulationen an Fahrzeugnetzen (Fahrzeugbussystemen) bei einem Werkstattaufenthalt, z.B. durch eine Online-Diagnose, erkennbar zu machen. Außerdem ist es möglich, Busteilnehmer zu identifizieren, die nicht gemäß den Kommunikationsregeln senden und daher bspw. fehlerhaft sind bzw. nicht spezifikationsgemäß ausgeführt sind. Dies kann auch bei der Entwicklung eines Busteilnehmers (z.B. eines Steuergeräts) hilfreich sein.

Außerdem können durch die zuverlässige Angriffserkennung Maßnahmen ergriffen werden, wie z.B.:
- Abschalten von sensiblen vernetzten Funktionen (ACC, LaneAssist, etc.)
- Einschalten von kryptografischen Maßnahmen, nach Bedarf ("on demand")
- Persistieren von erkannten Angriffen für die Auswertung im Kundendienst
- Hacker Spielschutz, um typische (z.B. medienwirksame) Angriffe zu verhindern

Bei manchen Ausführungsbeispielen sind für unterschiedliche Nachrichtentypen unterschiedliche Kommunikationsregeln festgelegt und es werden (nur) Nachrichten eines bestimmten Nachrichtentyps analysiert. Wie bereits oben erwähnt, hat bspw. beim CAN-Bus jede Nachricht einen Objekt-Identifier, um den Nachrichtentyp (z.B. Temperaturwert, Druckwert, Spannungswert, etc.) anzugeben. Indem bspw. nur bestimmte Nachrichtentypen, z.B. anhand ihres Objekt-Identifiers, analysiert werden, kann insgesamt der Analyseaufwand verringert werden und bspw. auf Nachrichtentypen fokussiert werden, der sicherheitskritische Nachrichteninhalte betrifft (z.B. Bremsdruck, Lenkungswinkel oder dergleichen).

Bei manchen Ausführungsbeispielen geben die Kommunikationsregeln einen festen Nachrichtenübertragungszyklus vor und das Analysieren umfasst, ob die Nachrichten gemäß dem festen Nachrichtenübertragungszyklus empfangen wurden. Bei manchen Ausführungsbeispielen sind für unterschiedliche Nachrichtentypen unterschiedliche Nachrichtenzyklen vorgegeben. Ein Nachrichtenzyklus beschreibt dabei in welchen (z.B. festen) zeitlichen Abständen, eine Nachricht gesendet wird, wobei bspw. eine bestimmte Toleranzgrenze vorgesehen sein kann, die bei der Analyse, ob eine Abweichung vom Nachrichtenzyklus vorliegt, beachtet wird. Die Überwachung des Nachrichtenzyklusses ist ein vergleichsweise einfaches Kriterium für die Überwachung und daher einfach und kostengünstig zu realisieren. Ein Angriffsversuch, der den Nachrichtenzyklus nicht kennt oder nicht beachtet und daher außerhalb des Nachrichtenzyklusses Nachrichten versendet, kann daher einfach erkannt werden.

Bei manchen Ausführungsbeispielen geben die Kommunikationsregeln eine Sperrzeit zwischen zwei aufeinanderfolgenden Nachrichten vor und das Analysieren umfasst, ob zwei aufeinanderfolgende Nachrichten gemäß der vorgegebenen Sperrzeit empfangen werden. Eine solche Sperrzeit, auch "Inhibit-Time" genannt, kann vorgesehen sein, um eine Überlastung des Bussystems zu vermeiden. Außerdem kann bspw. ein Angriffsversuch, bei dem zwar Nachrichten gemäß einem vorgegebenen Nachrichtenzyklus übermittelt werden, aber innerhalb der Sperrzeit, erkannt werden.

Bei manchen Ausführungsbeispielen wird zusätzlich analysiert, ob der Nachrichteninhalt zweier aufeinanderfolgender Nachrichten identisch ist. Der Nachrichteninhalt kann bspw. in Abhängigkeit bestimmter Ereignisse variieren (z.B. Nachrichten vom ABS-Steuergerät bei starkem Bremsen oder dergleichen). Ein Angriffsversuch, bei dem bspw. nur identische Nachrichten gesendet werden, kann daher erkannt werden.

Bei manchen Ausführungsbeispielen geben die Kommunikationsregeln in Abhängigkeit eines vorgegebenen Ereignisses einen Wechsel eines Nachrichtenzyklusses vor und das Analysieren umfasst, ob die empfangenen Nachrichten gemäß dem vorgegebenen Wechsel des Nachrichtenzyklusses empfangen werden. Solche Wechsel eines Nachrichtenzyklusses kommen bspw. vor, um Zustandswechsel anzuzeigen (z.B. Licht an/aus, etc.). Wird der Nachrichtenzyklus nach einem Zustandswechsel neu begonnen, während bspw. bei einem Angriffsversuch die Nachrichten nach demselben Nachrichtenzyklus wie vor dem Wechsel gesendet werden, kann der Angriff erkannt werden.

Bei manchen Ausführungsbeispielen geben die Kommunikationsregeln in Abhängigkeit eines vorgegebenen Ereignisses eine Änderung einer Nachrichtenzyklusdauer vor und das Analysieren umfasst, ob die empfangenen Nachrichten gemäß der vorgegebenen Änderung der Nachrichtenzyklusdauer empfangen werden. Hier kann ein Angriff erkannt werden, wenn der Angriff die Änderung der Nachrichtenzyklusdauer nicht mitmacht.

Bei manchen Ausführungsbeispielen geben die Kommunikationsregeln in Abhängigkeit eines vorgegebenen Ereignisses einen Neustart eines Nachrichtenzyklusses vor und das Analysieren umfasst, ob die empfangenen Nachrichten gemäß dem Neustart des Nachrichtenzyklusses empfangen werden. Hier kann ein Angriff erkannt werden, wenn der Angriff den Neustart des Nachrichtenzyklusses nicht mitmacht. Außerdem kann analysiert werden, ob die vor und nach dem Neustart empfangenen Nachrichten denselben Nachrichteninhalt haben. Damit können Angriffe erkannt werden, bei denen zwar der Neustart des Nachrichtenzyklusses mitgemacht wird, aber nicht der Nachrichteninhalt geändert wird.

Bei manchen Ausführungsbeispielen geben die Kommunikationsregeln einen ersten Nachrichtenzyklus und einen zweiten Nachrichtenzyklus vor, wobei der zweite Nachrichtenzyklus kürzer als der erste Nachrichtenzyklus ist, wobei Nachrichten gemäß dem zweiten Nachrichtenzyklus zum Anzeigen eines Zustandswechsels gesendet werden, wobei nach Beendigung des zweiten Nachrichtenzyklusses Nachrichten gemäß dem ersten Nachrichtenzyklus gesendet werden und wobei das Analysieren umfasst, ob die Nachrichten entsprechend diesen Kommunikationsregeln empfangen werden. Hier können Angriffe erkannt werden, bei denen bspw. Nachrichten nur gemäß dem ersten Nachrichtenzyklus gesendet werden.

Bei manchen Ausführungsbeispielen geben die Kommunikationsregeln vor, dass ein Nachrichtenzyklus und ein Nachrichteninhalt eines vorgegebenen Nachrichtentyps in Abhängigkeit eines bestimmten Ereignisses geändert werden, wobei das Analysieren umfasst, ob der Nachrichteninhalt des Nachrichtentyps unverändert bleibt. Damit können Angriffe erkannt werden, die zwar die Änderung eines Nachrichtenzyklusses mitmachen, aber keine Änderung des Nachrichteninhalts vornehmen.

Bei manchen Ausführungsbeispielen umfasst das Angriffserkennungsverfahren zusätzlich das Ausgeben einer (Warn-)Nachricht, wenn die Nachrichten nicht gemäß den Kommunikationsregeln empfangen wurden. Die Nachricht kann dabei in vielfacher Weise verwendet werden: zum Anzeigen, das ein Angriff vorliegt, zum Abschalten sicherheitssensibler Steuergeräte, zum Einleiten von Gegenmaßnahmen oder weiterer Sicherheitsmaßnahmen, etc. Diese (Warn-)Nachricht kann dann ausgeben werden, wenn eine vorgegebene Anzahl von Nachrichten nicht gemäß den Kommunikationsregeln empfangen werden. Dabei kann sich die vorgegebene Anzahl nach vorgegebenen Szenarien richten, die sich aus den Kommunikationsregeln ergeben und nach denen es bspw. möglich ist, dass auch "richtige" Nachrichten aufgrund von Sonderregeln, den betrachteten Kommunikationsregeln widersprechen. So kann, wie oben ausgeführt, eine Änderung eines Nachrichtenzyklusses bei bestimmten Ereignissen auftreten oder das Senden von Nachrichten außerhalb des Zyklusses, etc. Da solche Konstellationen Ausnahmen sind, wird bei manchen Ausführungsbeispielen davon ausgegangen, dass nach Aussenden von wenigen Nachrichten, bspw. drei, die Ausnahmesituation vorüber ist und daher die Nachrichten wieder gemäß den Kommunikationsregeln übermittelt werden. Werden in einer solchen Situation weiterhin Nachrichten nicht gemäß den Kommunikationsregeln empfangen, d.h. mehr als die vorgegebene Anzahl, kann man davon ausgehen, dass ein Angriff vorliegt.

Bei manchen Ausführungsbeispielen gibt es folglich im Wesentlichen drei Kommunikationsmuster, die durch die Kommunikationsregeln festgelegt sind und nach denen Nachrichten versendet werden:
i) Zyklische Aussendung, das heißt periodisch mit festem Zeitabstand
ii) Unmittelbare Aussendung, bspw. ausgelöst durch ein Ereignis wie eine Zustandsänderung
iii) Funktionsabhängig - z.B. mehr Nachrichten, wenn eine bestimmte Funktion eingeschaltet ist (z.B. Blinker eingeschaltet oder dergleichen).

Dementsprechend umfasst das Analysieren bei manchen Ausführungsbeispielen, ob die empfangenen Nachrichten unter (mindestens) eines dieser drei Kommunikationsmuster bzw. eine Kombination aus diesen drei Kommunikationsmustern fällt und wenn dies nicht der Fall ist, wird ein Angriff erkannt.

Ferner kann bei manchen Ausführungsbeispielen auf Grundlage der bekannten Kommunikationsregeln eine Vorhersage getroffen werden, wann eine nächste Nachricht empfangen wird und welchen Nachrichteninhalt sie hat, also ob sie bspw. denselben Nachrichteninhalt wie vorherige Nachrichten oder einen veränderten Nachrichteninhalt hat. Auf diese Art und Weise können auch Angriffe bei komplexeren Sendemustern erkannt werden, wie sie bspw. bei Änderung eines Nachrichtenzyklusses oder dem Aussenden von mehreren Nachrichten, um einen Zustandswechsel anzuzeigen, vorkommen können.

Manche Ausführungsbeispiele betreffen eine Angriffserkennungsvorrichtung für ein Bussystem für ein Kraftfahrzeug mit einem Mikroprozessor, wobei die Angriffserkennungsvorrichtung dazu eingerichtet ist, Nachrichten über das Bussystem zu empfangen und der Mikroprozessor dazu eingerichtet ist, das oben beschriebene Angriffserkennungsverfahren auszuführen. Die Angriffserkennungsvorrichtung kann ferner eine Schnittstelle aufweisen, über die sie mit dem Bussystem verbunden ist und mit anderen Busteilnehmern kommunizieren kann. Die Angriffserkennungsvorrichtung kann auch noch weitere Funktionen haben, bspw. die eines Steuergeräts oder dergleichen und/oder sie kann auch noch weitere sicherheitsrelevante Funktionen ausführen, wie bspw. eine Firewall oder dergleichen. Die Angriffserkennungsvorrichtung kann auch als zusätzliche Vorrichtung im Bussystem vorgesehen sein.

Manche Ausführungsbeispiele betreffen ein Bussystem für ein Kraftfahrzeug mit wenigstens einer Busleitung und mehreren Busteilnehmern, die über die Busleitung miteinander Nachrichten austauschen, wobei wenigstens ein Busteilnehmer dazu eingerichtet ist, das oben beschriebene Angriffserkennungsverfahren auszuführen. Die obigen Ausführungen gelten analog.

Bei manchen Ausführungsbeispielen ist das Angriffserkennungsverfahren bspw. in einer Vorrichtung wie einem Steuergerät oder dergleichen implementiert. Das Steuergerät kann ein zusätzliches Steuergerät sein, welches zusätzlich zu vorhandenen Steuergeräten in einem Bussystem vorgesehen ist. Das Angriffserkennungsverfahren kann auch in einem bereits vorhandenen Steuergerät eines Bussystems implementiert sein. Außerdem kann das Angriffserkennungsverfahren, wie auch schon weiter oben erwähnt, in einer Angriffserkennungsvorrichtung implementiert sein, welche bspw. zusätzlich als Firewall oder Gateway ausgestaltet ist, und bspw. zwischen einem ersten Bussystemabschnitt, über den nicht sicherheitskritische Nachrichten gesendet werden, und einem zweiten Bussystemabschnitt angeordnet ist, über den sicherheitskritische Nachrichten übermittelt werden. Dadurch ist bspw. ein Zugriff auf den sicherheitskritischen Abschnitt des Bussystems über einen Busteilnehmer, z.B. Infotainmentsystem, der im nicht sicherheitskritischen Abschnitt des Bussystems angeordnet ist, unterbunden. Damit können auch Angriffe über solche Wege blockiert werden.

Außerdem kann das Angriffserkennungsverfahren, wenn es bspw. in einer als Gateway ausgestalteten Angriffserkennungsvorrichtung implementiert ist, dazu eingerichtet sein, eine Weiterleitung einer bestimmten Nachricht bzw. Nachrichten eines bestimmten Nachrichtentyps (z.B. eine Nachricht mit einer bestimmten CAN-ID) zu blockieren, wenn erkannt wurde, dass diese Nachrichten bzw. dieser Nachrichtentyp Gegenstand eines Angriffs ist.

Bei manchen Ausführungsbeispielen ist das Angriffserkennungsverfahren bspw. als Programmcode ausgestaltet oder als Computerprogramm und als Software abgespeichert, z.B. auf einem computerlesbaren Medium, in einer Datei oder es wird als Datenstrom bspw. über das Internet bereitgestellt. Dementsprechend betreffen manche Aspekte der vorliegenden Erfindung ein computerlesbares Medium, eine Datei, einen Datenstrom oder dergleichen, der einen Programmcode enthält, der, wenn er auf einem Computer, Prozessor oder dergleichen ausgeführt wird, denselbigen dazu veranlasst, das hierin beschriebene Angriffserkennungsverfahren auszuführen.

Manche Ausführungsbeispiele betreffen auch ein Kraftfahrzeug mit einem Bussystem, wie es hierin beschrieben ist.

Ausführungsbeispiele der Erfindung werden nun beispielhaft und unter Bezugnahme auf die beigefügte Zeichnung beschrieben, in der:
Fig. 1 schematisch ein Ausführungsbeispiel eines CAN-Bussystems für ein Kraftfahrzeug veranschaulicht;
Fig. 2 schematisch ein Ablaufschema eines Ausführungsbeispiels eines Angriffserkennungsverfahren zeigt;
Fig. 3a die Kommunikationsregeln für einen ersten Nachrichtentyp veranschaulicht;
Fig. 3b und 3c Nachrichten und Angriffsnachrichten für den ersten Nachrichtentyp zeigen;
Fig. 4a die Kommunikationsregeln für einen zweiten Nachrichtentyp veranschaulicht;
Fig. 4b bis 4d Nachrichten und Angriffsnachrichten für den zweiten Nachrichtentyp zeigen;
Fig. 5a die Kommunikationsregeln für einen dritten Nachrichtentyp veranschaulicht;
Fig. 5b bis 5e Nachrichten und Angriffsnachrichten für den dritten Nachrichtentyp zeigen;
Fig. 6a die Kommunikationsregeln für einen vierten Nachrichtentyp veranschaulicht;
Fig. 6b bis 6e Nachrichten und Angriffsnachrichten für den vierten Nachrichtentyp zeigen;
Fig. 7a die Kommunikationsregeln für einen fünften Nachrichtentyp veranschaulicht; und
Fig. 7b bis 7f Nachrichten und Angriffsnachrichten für den fünften Nachrichtentyp zeigen.

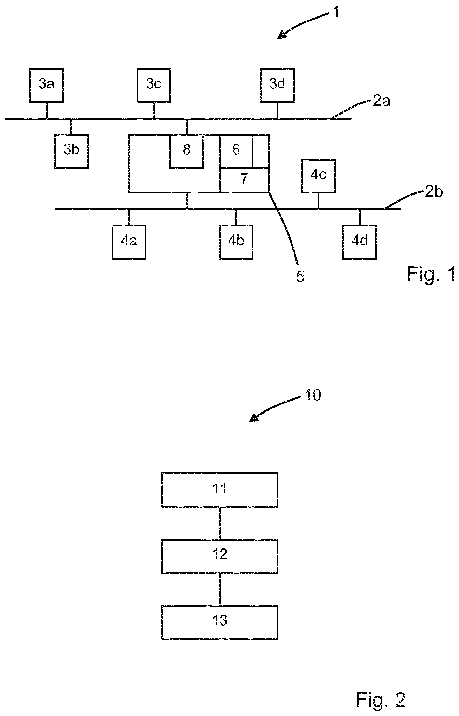

Ein Ausführungsbeispiel eines CAN-Bussystems 1 ist in Fig. 1 schematisch veranschaulicht.

Das CAN-Bussystem 1 hat hier beispielhaft zwei Leitungsstränge 2a und 2b, an denen jeweils Busteilnehmer 3a bis 3d bzw. 4a bis 4d sowie ein als Gateway-Steuergerät 5 ausgebildeter Busteilnehmer angeordnet sind.

An dem ersten Leitungsstrang 2a sind die Busteilnehmer 3a bis 3d angeschlossen, wobei diese nicht sicherheitskritische Funktionen des Kraftfahrzeugs betreffen und sie können bspw. als ein Navigationsgerät, ein CD-Spieler, ein Anzeigeinstrument, Infotainmentsystem oder aber auch als Lichtschalter oder dergleichen ausgebildet sein.

An dem zweiten Leitungsstrang 2b sind die Busteilnehmer 4a bis 4d angeschlossen, wobei diese sicherheitskritische Funktionen des Kraftfahrzeugs betreffen und die Busteilnehmer 4a bis 4d sind bspw. als ein ABS-Steuergerät, ein Steuergerät zur Fahrdynamikregelung oder dergleichen ausgebildet.

Das Gateway-Steuergerät 5 ist zwischen dem ersten 2a und dem zweiten 2b Leitungsstrang des CAN-Bussystems 1 angeordnet und enthält bspw. eine Gateway- und Firewall-Funktionalität, sodass es Angriffsversuche, die über einen der Busteilnehmer 3a bis 3d des nicht sicherheitskritischen Leitungsstranges 2a vorgenommen werden, abblocken kann, indem es bspw. entsprechende Nachrichten nicht von dem ersten Leitungsstrang 2a zu dem zweiten Leitungsstrang 2b übermittelt. Außerdem ist das Gateway-Steuergerät 5 dazu eingerichtet, das hierin beschriebene Angriffserkennungsverfahren auszuführen. Dadurch bildet das Gateway-Steuergerät 5 eine Angriffserkennungsvorrichtung, die im Folgenden auch als IDS 5 ("Intrusion Detection System") bezeichnet wird. Auch wenn bei diesem Ausführungsbeispiel die Gateway-Funktionalität mit im IDS 5 implementiert ist, ist die vorliegende Erfindung nicht in dieser Hinsicht beschränkt. Das IDS 5 kann auch ohne Gateway-Funktionalität vorgesehen sein und bspw. nur das hierin beschriebene Angriffserkennungsverfahren ausführen.

Die einzelnen Busteilnehmer 3a-d bzw. 4a-d sowie das IDS 5 können CAN-Nachrichten über das CAN-Bussystem 1 bzw. die Leitungen 2a und 2b, an denen sie angeschlossen sind, austauschen, wie es dem Fachmann auch grundsätzlich bekannt ist.

Das IDS 5 hat, wie auch typischerweise die anderen Busteilnehmer 3a-d bzw. 4a-d, einen Mikroprozessor 6 mit einem Speicher 7 und eine Schnittstelle 8, über die es auf die Busleitungen 2a und 2b zugreifen kann und CAN-Nachrichten senden und empfangen kann.

Wie auch oben bereits ausgeführt, haben CAN-Nachrichten typischerweise einen Objekt-Identifier (im Folgenden "CAN-ID" oder kurz "ID" genannt), der den Nachrichtentyp angibt, sowie einen Nutzdatenbereich, der im Folgenden auch Nachrichteninhalt genannt wird. Der grundsätzliche Aufbau eines CAN-Bussystems, die Nachrichtenübermittlung und auch der Aufbau der CAN-Nachrichten sind dem Fachmann bekannt.

Auf dem CAN-Bussystem 1 sind typischerweise einige Eigenschaften sichtbar, wie bspw. die ID, die Sendeart, die Zykluszeit, das Taktverhalten, etc. Andere hingegen sind nicht sichtbar, wie bspw. die sogenannte Sperrzeit, der Sender einer Nachricht, der Empfänger, die Bedeutung des Nachrichteninhalts, etc.

Im Folgenden wird, ohne Einschränkung der Allgemeinheit, bei den Ausführungsbeispielen davon ausgegangen, dass die im CAN-Bussystem 1 sichtbaren Eigenschaften verwendet werden sowie aus den Kommunikationsregeln bekannte Spezifikationen, wie die Sperrzeit, etc. Außerdem wird nur beispielhaft für die folgenden Erläuterungen folgendes Angreifer-Modell angenommen, wobei der Angreifer (Gegner), wie im Allgemeinen üblich, als "Oscar" bezeichnet wird:
- Oscar hat Kontrolle über einen der Busteilnehmer 3a-d bzw. 4a-d, z.B. den Busteilnehmer 3a.
- Oscar kann mit dem Busteilnehmer 3a beliebige CAN-Nachrichten auf dem CAN-Bussystem 1 senden und empfangen.
- Oscar kann mit dem Busteilnehmer 3a keine CAN-Nachrichten von den anderen Busteilnehmern 3b-d bzw. 4a-d entfernen, aufhalten oder zerstören.
- Oscar möchte die anderen Busteilnehmer 3b-d bzw. 4a-d beeinflussen und ein ungewünschtes Verhalten hervorrufen.

Auch wenn hier beispielhaft Oscar Kontrolle über den Busteilnehmer 3a hat, ist die vorliegende Erfindung nicht in dieser Hinsicht beschränkt, sondern Oscar könnte sich bspw. auch mit einer eigenen Vorrichtung (eigenes Steuergerät, Computer mit entsprechender Software, etc.) Zugang zum CAN-Bussystem 1 verschaffen.

Bei dem hier betrachteten Ausführungsbeispiel hat folglich das IDS 5 Zugang zu den im CAN-Bussystem 1 sichtbaren Eigenschaften und den unsichtbaren Eigenschaften, die in den Kommunikationsregeln festgelegt sind (z.B. Sperrzeit). Oscar hat bei dem betrachteten Ausführungsbeispiel nur Zugang zu den sichtbaren Eigenschaften, wobei das hierin beschriebene Angriffsverfahren auch bei Fällen anwendbar ist und funktioniert, bei denen der Angreifer ebenfalls die Kommunikationsregeln (wenigstens teilweise) kennt, z.B. die Sperrzeit. Die im Folgenden gezeigten Beispiele berücksichtigen daher auch, dass Oscar z.B. eine Sperrzeit beachtet.

Für das im Folgenden beschriebene Angriffserkennungsverfahren 10, für welches Fig. 2 ein Ablaufschema veranschaulicht, welches das IDS 5 ausführt, werden folgende Annahmen, ohne Beschränkung der Allgemeinheit, für ein "Verteidiger Modell" getroffen:
- Das IDS 5 ist, wie ausgeführt, ein eigener Busteilnehmer (eigene "ECU" - "electronic control unit", auch Steuergerät genannt) auf dem CAN-Bussystem 1.
- Das IDS 5 kann also alle CAN-Nachrichten auf dem CAN-Bussystem 1 mitlesen.
- Das IDS 5 kennt die Nachrichtentypen (Signaltypen) und deren Parameter für alle CAN-Nachrichten und die zugehörigen Kommunikationsregeln.
- Das IDS 5 möchte jede Art von Angriff erkennen und kann ggf. Gegenmaßnahmen einleiten, um ein unerwünschtes Verhalten zu verhindern

Außerdem werden auf dem CAN-Bussystem 1 hauptsächlich zyklische CAN-Nachrichten gesendet, das heißt Nachrichten, die periodisch gesendet werden, sodass angenommen werden kann, dass im kompletten Zeitraum der Busaktivität zyklische CAN-Nachrichten gesendet werden.

Daraus folgt, dass Oscar seine Angriffs-Nachrichten zusätzlich zum normalen Busverkehr der CAN-Nachrichten senden muss, weswegen eine Verletzung der Kommunikationsregeln wahrscheinlich ist und seine Angriffe gut detektierbar sind.

Allgemein führt das IDS 5, das unter Bezugnahme auf Fig. 2 im Folgenden erläuterte Angriffserkennungsverfahren 10 aus.

Das Angriffserkennungsverfahren 10, das das IDS 5 ausführt, empfängt bei 11 alle CAN-Nachrichten, die über das CAN-Bussystem geschickt werden, wobei grundsätzlich ein Filter oder dergleichen vorgesehen sein kann, sodass nur bestimmte CAN-Nachrichten verarbeitet werden. Ein solcher Filter kann bspw. Filterregeln enthalten, die bestimmte CAN-Nachrichten herausfiltern, z.B. solche, die nicht eine entsprechende ID enthalten bzw. solche deren ID im Filter eingetragen ist.

Bei 12 analysiert es, ob die empfangenen CAN-Nachrichten gemäß den bekannten Kommunikationsregeln empfangen werden.

Bei 13 gibt es eine Nachricht (Warnmeldung) aus, wenn die CAN-Nachrichten nicht gemäß den Kommunikationsregeln empfangen wurden. Diese Warnmeldung kann weiter verwendet werden, um entsprechende Maßnahmen zu ergreifen, wie sie bereits oben erläutert wurden.

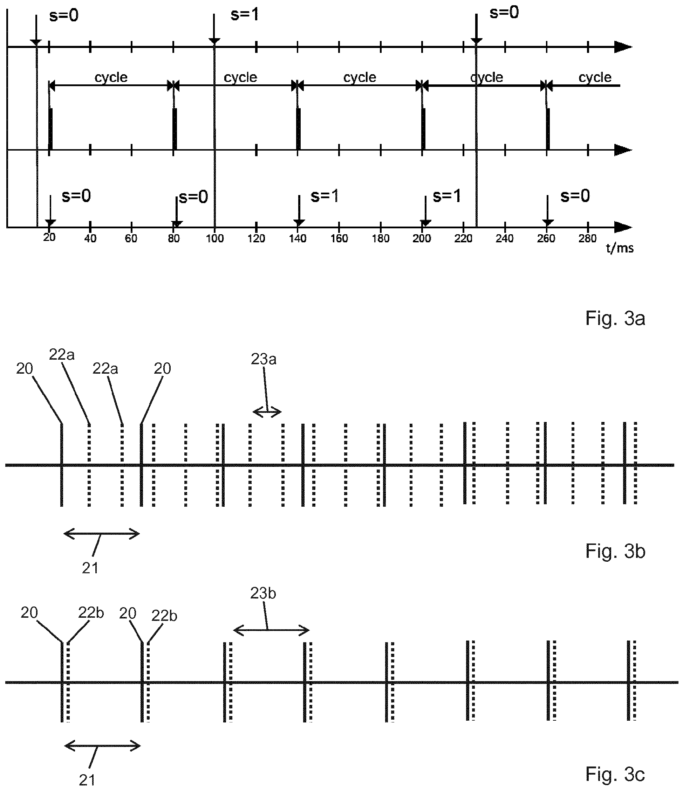

Im Folgenden wird beispielhaft für fünf unterschiedliche CAN-Nachrichtentypen unter Bezugnahme auf die Figuren 3a bis 7f die Funktionsweise des IDS 5 bzw. insbesondere der Analyseschritt 12 erläutert ohne, dass die vorliegende Erfindung auf diese Szenarien beschränkt sein soll.

Fig. 3a veranschaulicht Kommunikationsregeln für CAN-Nachrichten 20 (Fig. 3b, 3c) eines ersten Nachrichtentyps. Auf der Abszisse der Fig. 3a ist die Zeit (t) in Millisekunden (ms) aufgetragen, wobei im oberen Drittel der Fig. 3a Ereignisse s=0 bzw. s=1 gezeigt sind, in der Mitte CAN-Nachrichten als senkrechte Striche, die zyklisch mit einem festen Abstand ("cycle") von 60 ms gesendet und dementsprechend empfangen werden (bei 20 ms, 80 ms, 140 ms, 200 ms, 260 ms) und im untersten Bereich der CAN-Nachrichteninhalt s=0 bzw. s=1, der sich entsprechend mit dem Eintritt eines Ereignisses ändert.

Die Kommunikationsregeln für den ersten Nachrichtentyp sind derart, dass die Nachrichten zyklisch, das heißt in regelmäßigen Abständen mit fester Zyklusdauer 21 (s. auch Fig. 3b, 3c, hier 60 ms) zur Status-Mitteilung gesendet werden. Diese CAN-Nachrichten 20 treten nicht außerhalb des vorgegeben Zyklusses zu anderen Zeitpunkten auf. Außerdem, wie auch Fig. 3a entnommen werden kann, führt ein Zustandswechsel von s=0 auf s=1 nicht zu einer Änderung des Zyklusses, sondern die nächste gemäß dem Zyklus auszusendende CAN-Nachricht hat dann den entsprechenden Nachrichteninhalt s=1 (siehe Ereignis s=1 bei 100 ms wobei die unmittelbar nächste CAN-Nachricht bei 140 ms den geänderten Nachrichteninhalt s=1 hat, etc.).

Als Parameter können von der IDS 5 die ID und die Zyklusdauer gesehen werden.

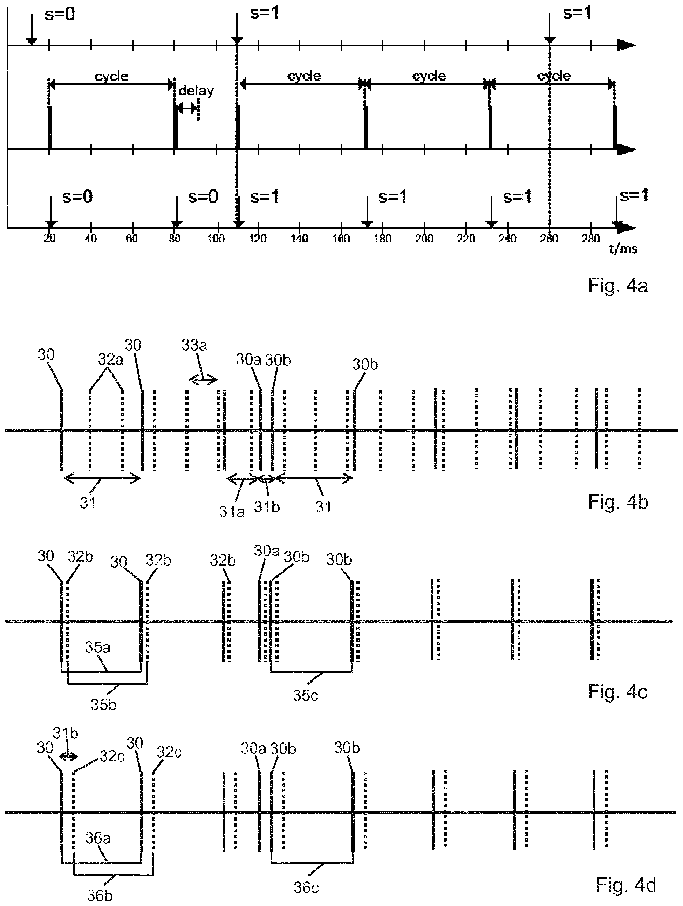

Fig. 3b veranschaulicht ein erstes Angriffsszenario, bei dem Oscar fortlaufend Angriffsnachrichten 22a sendet, wobei er diese mit einem zeitlichen Abstand 23a sendet, der geringer als die Zyklusdauer 21 der CAN-Nachrichten 20 ist. Allgemein sind in den Fig. 3b-c und auch in den Fig. 4b-d, 5b-e, 6b-e und 7b-f CAN-Nachrichten als durchgezogene Linien dargestellt sind, während Angriffs-Nachrichten als gepunktete Linien dargestellt sind. Die Angriffs-Nachrichten 22a haben eine ID, die der ID der CAN-Nachrichten 20 entspricht und haben einen von Oscar gewünschten Nachrichteninhalt (z.B. Nutzdateninhalt).

Fig. 3c veranschaulicht ein zweites Angriffsszenario, bei dem Oscar immer unmittelbar nach einer CAN-Nachricht 20 eine Angriffsnachricht 22b sendet, wobei die Angriffsnachrichten 22b mit einer Zyklusdauer 23b gesendet werden, die der Zyklusdauer 21 der CAN-Nachrichten 20 entspricht. Die Angriffs-Nachrichten 22b haben eine ID, die der ID der CAN-Nachrichten 20 entspricht und haben einen von Oscar gewünschten Nachrichteninhalt.

Bei dem zweiten Angriffsszenario ist aus Oscars Sicht das Ziel, eine originale CAN-Nachricht möglichst schnell mit einer eigenen Nachricht zu überschreiben und möglichst lange mit seiner Nachricht einen Busteilnehmer zu steuern. Bewirkt zum Beispiel die originale CAN-Nachricht, dass ein Licht im Innenraum des Fahrzeugs ausgeschaltet wird und enthalten entsprechende Folgenachrichten den Zustand "Licht aus", könnte Oscar mit einer entsprechenden Nachricht, die unmittelbar nach der originalen CAN-Nachricht zum Lichtausschalten gesendet wurde, bewirken, dass das Licht eingeschaltet wird und auch solange eingeschaltet bleibt, bis die nächste CAN-Nachricht zum Lichtausschalten kommt.

Das IDS 5 prüft jeweils die Zeit zwischen zwei aufeinanderfolgenden Nachrichten und wenn es erkennt, dass der zeitliche Abstand zwei aufeinanderfolgenden Nachrichten nicht mit der vorgegebenen Zyklusdauer 21 übereinstimmt, gibt es eine Warnmeldung aus.

Dementsprechend stellt das IDS 5 für das erste Szenario der Fig. 3a fest, dass zwischen der ersten CAN-Nachricht 20 und der ersten Angriffs-Nachricht 22a deutlich weniger Zeit als die Zyklusdauer 21 verstrichen ist. Gleiches gilt für den zeitlichen Abstand zwischen der ersten Angriffs-Nachricht 22a und der zweiten Angriffs-Nachricht 22a oder für den zeitlichen Abstand zwischen der zweiten Angriffs-Nachricht 22a und der zweiten CAN-Nachricht 20, etc.

Ähnliches gilt für das zweite Szenario der Fig. 3b. Dort ist immer die Zeitdauer zwischen einer CAN-Nachricht 20 und der unmittelbar darauffolgenden Angriffs-Nachricht 22b viel kürzer als die Zyklusdauer 21 und zwischen einer Angriffs-Nachricht 22b und einer darauffolgenden CAN-Nachricht 20 ein wenig kürzer als die Zyklusdauer 21, wobei letztere verkürzte Zyklusdauer als noch innerhalb eines Toleranzbereiches liegend erkannt werden kann.

Das IDS 5 erkennt folglich sofort einen Angriff von Oscar auf Nachrichten des ersten Typs, wenn ein zeitlicher Abstand zwischen zwei aufeinanderfolgenden Nachrichten die Zykluszeit um mehr als eine vorgegebene Toleranz (z.B. 10% der Zyklusdauer) unterschreitet.

Daher kann Oscar keinerlei Nachrichten erfolgreich einspeisen, solange das betreffende Steuergerät (Busteilnehmer) die CAN-Nachrichten des ersten Typs selbst sendet, sodass hier eine Detektionsrate von 100% vorliegt.

Verwechslungen zwischen einem Angriff von Oscar und einer Fehlfunktion können entstehen, wenn sich ein Busteilnehmer nicht gemäß den Kommunikationsregeln verhält und daher ein Verhalten zeigt, das vom IDS 5 als ein Angriff erkannt wird. In einem solchen Fall kann ein fehlerhafter Busteilnehmer identifiziert werden, was insbesondere z.B. während einer Entwicklungsphase eines Steuergeräts hilfreich sein kann.

Fig. 4a veranschaulicht die Kommunikationsregeln für CAN-Nachrichten eines zweiten Nachrichtentyps. Auf der Abszisse der Fig. 4a ist wieder die Zeit (t) in Millisekunden (ms) aufgetragen, wobei im oberen Drittel der Fig.4a Ereignisse s=0 bzw. s=1 gezeigt sind, in der Mitte CAN-Nachrichten als senkrechte Striche, die zyklisch mit einem festen Abstand ("cycle") von hier 60 ms gesendet und dementsprechend empfangen werden und im untersten Bereich der CAN-Nachrichteninhalt s=0 bzw. s=1. Bei CAN-Nachrichten des zweiten Typs kann eine Aktualisierung eines Statusses geschehen, wobei bei einem Zustandswechsel, z.B. von s=0 zu s=1, eine Nachricht unmittelbar nach einer vorgegebenen Sperrzeit (auch Inhibitzeit genannt und in Fig. 4a als "delay" gekennzeichnet) ausgesendet werden kann. Danach wird wieder die vorgegebenen Zyklusdauer, hier 60 ms, eingehalten.

Als Parameter können von der IDS 5 die ID, die Zyklusdauer und die Sperrzeit gesehen werden.

Die Kommunikationsregeln für den zweiten Nachrichtentyp sind also derart, dass die CAN-Nachrichten grundsätzlich in regelmäßigen Abständen mit fester Zyklusdauer zur Zustands-Mitteilung ausgesendet werden. Bei einem Zustandswechsel werden die CAN-Nachrichten zu unregelmäßigen Zeiten ausgesendet, um den Zustandswechsel (schnell) anzeigen zu können. Dabei muss allerdings eine vorgegebene Sperrzeit, hier bspw. 10 ms eingehalten werden. Nach Abschluss der Aktualisierung, das heißt nach dem Zustandswechsel, wird der Takt neu begonnen und die vorgegebene Zyklusdauer eingehalten.

Dies ist auch in den Fig. 4b-d dargestellt. Zunächst werden CAN-Nachrichten 30 mit einer Zyklusdauer 31 ausgesendet. Dann kommt eine CAN-Nachricht 30a mit einem aktualisierten Nachrichteninhalt, die nach einem Zeitabstand 31b ausgesendet wird, der deutlich kürzer als die Zyklusdauer 31 ist. Auf die CAN-Nachricht 30a folgt nach Ablauf der Sperrzeit 31b eine weitere CAN-Nachricht 30b mit wiederum aktualisierten Nachrichteninhalt. Danach ist der Zustandswechsel abgeschlossen und die CAN-Nachrichten 30b werden wieder mit der vorgegebenen Zyklusdauer 31 ausgesendet.

Fig. 4b veranschaulicht ein erstes Angriffsszenario, das dem der Fig. 3b gleicht und bei dem Oscar fortlaufend, in geringem zeitlichen Abstand 33a, Angriffs-Nachrichten 32a mit der entsprechenden ID und dem gewünschten Nachrichteninhalt sendet.

Fig. 4c veranschaulicht ein zweites Angriffsszenario, bei dem Oscar immer direkt nach einer CAN-Nachricht 30, 30a, 30b eine Angriffs-Nachricht 32b mit der entsprechenden ID und dem gewünschten Nachrichteninhalt sendet und folglich die Sperrzeit 31b missachtet und unterschreitet.

Fig. 4d veranschaulicht ein drittes Angriffsszenario, bei dem Oscar immer nach einer CAN-Nachricht 30, 30a, 30b eine Angriffs-Nachricht 32c mit der entsprechenden ID und dem gewünschten Nachrichteninhalt sendet, dabei aber die Sperrzeit 31b beachtet.

Die IDS 5 erkennt Angriffe bei CAN-Nachrichten des zweiten Typs auf der Basis von drei Stufen.

In einer ersten Stufe prüft das IDS 5 jeweils die Zeitdauer zwischen zwei aufeinanderfolgenden Nachrichten des zweiten Typs mit identischem Nachrichteninhalt (z.B. identischem Nutzdateninhalt). Werden keine zwei identischen Nachrichten gemäß der Zyklusdauer (innerhalb des Toleranzbereichs) empfangen, so wird eine Warnmeldung generiert (dies wäre für das erste Szenario der Fig. 4b der Fall, da dort Angriffsnachrichten 42a mit anderem Nachrichteinhalt auftreten).

In einer zweiten Stufe prüft das IDS 5 jeweils die Zeitdauer zwischen zwei aufeinanderfolgenden Nachrichten des zweiten Typs mit unterschiedlichen Nachrichteninhalt. Liegt diese Zeitdauer unterhalb der Sperrzeit (abzüglich des Toleranzbereichs), so wird eine Warnmeldung generiert (dies wäre der Fall für das erste Szenario der Fig. 4b und das zweite Szenario der Fig. 4c, da dort die Sperrzeit regelmäßig unterschritten wird).

In einer dritten Stufe erstellt das IDS 5 für jede CAN-Nachricht eine Vorhersage basierend auf der bekannten Zyklusdauer, wann die Nachricht wiederholt wird, sofern es zu keinem Zustandswechsel kommt, der eine CAN-Nachrichtensendung außerhalb der Zyklusdauer zur Folge hat. Wird allerdings in der Zwischenzeit ein Zustandswechsel ausgelöst und die Vorhersage trifft trotzdem zu, ist dies ein verdächtiges Verhalten. Wird ein solch verdächtiges Verhalten z.B. dreimal in einer kurzen vorgegebenen Zeitspanne erkannt, so wird eine Warnmeldung generiert. Dies wäre vorliegend bei dem zweiten Szenario, siehe Klammern 35a, 35b, 35c in Fig. 4c, und dem dritten Szenario, siehe Klammern 36a, 36b und 36c in Fig. 4d. der Fall, wobei die Klammern entsprechend verdächtige Fälle angeben und jeweils die dritte Klammer 35c bzw. 36c den jeweiligen dritten verdächtigen Fall angeben, der zu einer Warnmeldung führt.

Die erste und die zweite Stufe funktionieren exakt und können nicht umgangen werden und führen daher zu einer 100% Detektionsrate. Verwechslungen zwischen Angriffen von Oscar und einem Fehlerverhalten eines Busteilnehmers können bei durch ein irreguläres Verhalten eines Busteilnehmers vorkommen, wie es auch schon für den ersten Typ im Zusammenhang mit den Fig. 3a-c erläutert wurde.

Die dritte Stufe erkennt eine eingeschleuste Angriffs-Nachricht nur dann nicht, wenn im originalen Busverkehr danach ein Zustandswechsel getriggert wird. In diesem Fall kann Oscar beliebig viele Nachrichten (unter Beachtung von Stufen 1 und 2) einschleusen, bis eine Nachricht im originalen Busverkehr wiederholt wird.

Um nicht aufzufliegen, müsste Oscar folglich in die Zukunft sehen können, da er nicht weiß, wann eine Nachricht wiederholt wird.

False Positives in der dritten Stufe können nur durch unglückliches Timing vorkommen, bei dem bspw. der Zustandswechsel eine CAN-Nachrichtenaussendung mit einem derartigen zeitlichen Abstand zur Folge hat, dass dreimal ein auffälliges Verhalten erkannt wird. Die Wahrscheinlichkeit für einen solchen Zufall hängt von der vorgegeben Toleranz und den übrigen Eigenschaften der CAN-Nachrichten ab und ist im Allgemeinen als sehr gering einzuschätzen, insbesondere ist es sehr unwahrscheinlich, dass ein solches verdächtiges Verhalten drei- oder viermal in kurzer Zeit auftritt.

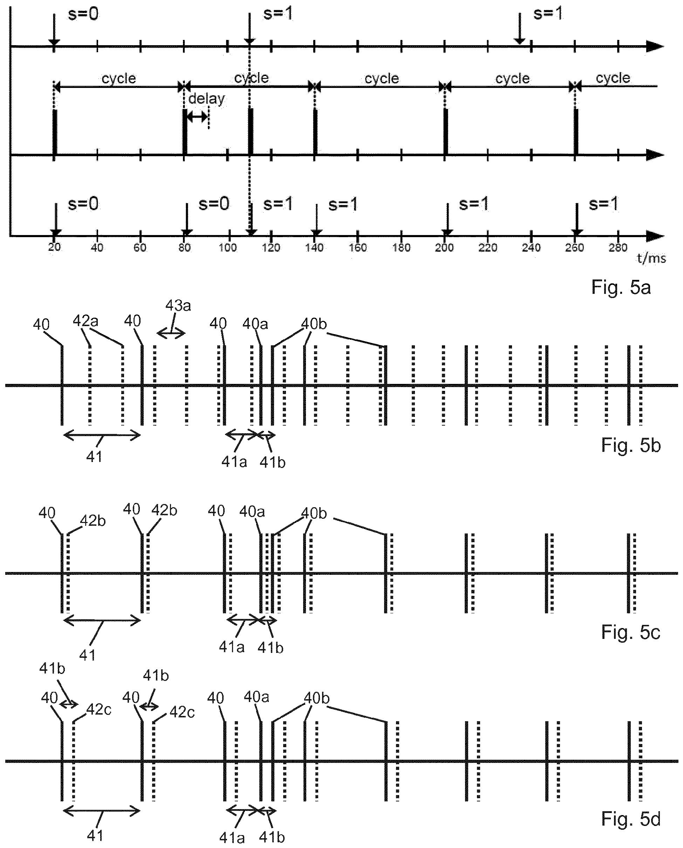

Fig. 5a veranschaulicht die Kommunikationsregeln für CAN-Nachrichten eines dritten Nachrichtentyps. Auf der Abszisse der Fig. 5a ist wieder die Zeit (t) in Millisekunden (ms) aufgetragen, wobei im oberen Drittel der Fig. 5a Ereignisse s=0 bzw. s=1 gezeigt sind, in der Mitte CAN-Nachrichten als senkrechte Striche, die zyklisch mit einem festen Abstand ("cycle") von hier 60 ms gesendet und dementsprechend empfangen werden und im untersten Bereich der CAN-Nachrichteninhalt s=0 bzw. s=1. Bei CAN-Nachrichten des dritten Typs kann eine Aktualisierung eines Statusses geschehen, wobei bei einem solchen Zustandswechsel, z.B. von s=0 zu s=1, eine Nachricht unmittelbar unter Berücksichtigung der vorgegebenen Sperrzeit (in Fig. 5a als "delay" gekennzeichnet) ausgesendet werden kann. Die Zyklusdauer wird allerdings beibehalten und der zugehörige Takt läuft quasi im Hintergrund weiter, sodass die nächste CAN-Nachricht in diesem Beispiel wieder 60 ms nach der CAN-Nachricht, die vor der durch die Statusänderung getriggerte CAN-Nachricht gesendet wurde, gesendet wird.

Als Parameter können von der IDS 5 die ID, die Zyklusdauer und die Sperrzeit gesehen werden.

Bei CAN-Nachrichten des dritten Nachrichtentyps sind die Kommunikationsregeln derart, dass die Signale in regelmäßigen Abständen mit vorgegebener Zyklusdauer zur Zustands-Mitteilung ausgesendet werden. Der Nachrichtenzyklus wird auch bei einem Zustandswechsel beibehalten. Eine Nachricht, die durch den Zustandswechsel ausgelöst wird, wird daher zwischen zwei Nachrichten, die im Zyklus und gemäß der Zyklusdauer gesendet werden, gesendet. Mit anderen Worten wird der Sendetakt der CAN-Nachrichten nach einem solchen Zustandswechsel im alten Rhythmus fortgeführt, wie auch Fig. 5a zeigt.

Dies ist auch in den Fig. 5b-d dargestellt. Zunächst werden CAN-Nachrichten 40 mit einer Zyklusdauer 41 ausgesendet. Dann kommt eine CAN-Nachricht 40a, die nach einem Zeitabstand 41a nach einer CAN-Nachricht 40 ausgesendet wird, der deutlich kürzer als die Zyklusdauer 41 ist und durch einen Zustandswechsel ausgelöst wird. Auf die CAN-Nachricht 40a folgt nach Ablauf der Sperrzeit 41b eine weitere CAN-Nachricht 40b, die durch einen weiteren Zustandswechsel ausgelöst wird. Danach ist der Zustandswechsel abgeschlossen und die CAN-Nachrichten 40b werden gemäß dem alten Rhythmus, der quasi im Hintergrund weiterläuft, wieder mit der vorgegebenen Zyklusdauer 41 ausgesendet, sodass die letzte CAN-Nachricht 40 vor dem Zustandswechsel und die erste CAN-Nachricht 40b nach Abschluss des Zustandswechsel im Abstand der Zyklusdauer 41 gesendet werden.

Fig. 5b veranschaulicht ein erstes Angriffsszenario, das dem der Fig. 3b bzw. 4b gleicht und bei dem Oscar fortlaufend, in geringem zeitlichen Abstand 43a, Angriffs-Nachrichten 42a mit der entsprechenden ID und dem gewünschten Nachrichteninhalt sendet.

Fig. 5c veranschaulicht ein zweites Angriffsszenario, bei dem Oscar immer direkt nach einer CAN-Nachricht 40, 40a, 40b eine Angriffs-Nachricht 42b mit der entsprechenden ID und dem gewünschten Nachrichteninhalt sendet und folglich die Sperrzeit 41b missachtet und unterschreitet.

Fig. 5d veranschaulicht ein drittes Angriffsszenario, bei dem Oscar immer nach einer CAN-Nachricht 40, 40a, 40b eine Angriffs-Nachricht 42c mit der entsprechenden ID und dem gewünschten Nachrichteninhalt sendet, dabei aber die Sperrzeit 41b beachtet.

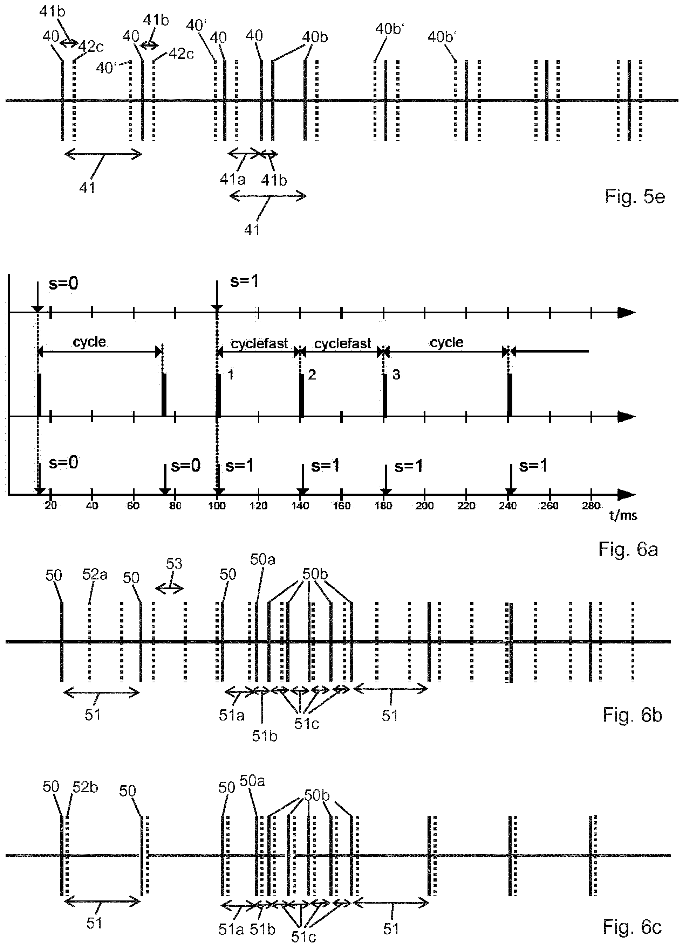

Fig. 5e veranschaulicht ein viertes Angriffsszenario, bei dem Oscar das dritte Angriffsszenario durchführt und entsprechend Angriffs-Nachrichten 42d sendet, aber wiederholt kurz vor dem nächsten Takt immer eine aktuelle, originale CAN-Nachricht 40' bzw. 40b' unter Beachtung der Sperrzeit 41b sendet (diese Nachrichten 40' bzw. 40b' sind als durchgezogene Linien dargestellt, da sie den echten CAN-Nachrichten 40 bzw. 40b entsprechen).

Das IDS 5 führt die Detektion von Angriffen auf CAN-Nachrichten des dritten Nachrichtentyps basierend auf vier Stufen aus:
In der ersten Stufe prüft das IDS 5 jeweils die Zeitdauer zwischen zwei aufeinanderfolgenden Nachrichten des dritten Typs mit identischen Nachrichteninhalten und prüft jeweils die aktuelle Statusregel und erhöht den Status:
- Status 0: Sperrzeit muss eingehalten werden
- Status 1: Zyklusdauer muss eingehalten werden, kann aber um die Sperrzeit verkürzt sein
- Status 2: Zyklusdauer muss eingehalten werden

In der zweiten Stufe prüft das IDS 5 jeweils die Zeitdauer zwischen zwei aufeinanderfolgenden Nachrichten des dritten Typs mit unterschiedlichen Nachrichteninhalten. Liegt diese Zeitdauer unterhalb der Sperrzeit (abzüglich des Toleranzbereichs), so wird eine Warnmeldung generiert.

In der dritten Stufe versucht das IDS 5 den Takt zu finden, wenn gerade kein Zustandswechsel stattfindet (Ruhephase) und erstellt eine Vorhersage, dass die CAN-Nachricht mit identischem Nachrichteninhalt zum nächsten Taktzeitpunkt, das heißt nach Ablauf einer Zyklusdauer, wiederholt wird. Wird ein Zustandswechsel ausgelöst, wird der Nachrichteninhalt der erwarteten CAN-Nachricht aktualisiert. Falls die Vorhersage nicht zutrifft, also nicht die letzte Nachricht mit identischem Nachrichteninhalt wiederholt wird, so wird eine Warnmeldung generiert.

In der vierten Stufe prüft das IDS 5, ob während eines Nachrichtenzyklusses mehrere Zustandsänderungen getriggert werden und ob die letzte CAN-Nachricht wieder den alten Nachrichteninhalt enthält. Sollte dies viermal in Folge passieren, wird eine Warnmeldung generiert.

Die erste Detektions-Stufe funktioniert exakt, sobald Status 1 eingetreten ist. In Status 0 kann Oscar nach einem Zustandswechsel-Ereignis für den Rest der Zyklusdauer Nachrichten einschleusen (sofern kein weiteres Ereignis hinzukommt). Da dieses Zeitfenster aber höchstens einmalig eine Zeitdauer von Zykluszeit minus dreimal die Sperrzeit lang ist, um nicht von Stufe 3 erkannt zu werden, ist dies als ungefährlich einzustufen.

Die zweite Stufe funktioniert exakt und die Erkennungsrate liegt bei 100%. Verwechslungen zwischen Angriffen Oscars und dem Fehlverhalten eines Busteilnehmers können, wie erwähnt, nur durch irreguläres Verhalten eines entsprechenden Busteilnehmers auftreten.

Die dritte Detektions-Stufe hilft zuverlässig gegen mehrere Angriffe, hat allerdings folgende Schwächen. Ist Oscar von Anfang an präsent, kann er verhindern, dass ein Takt gefunden wird und dadurch die dritte Detektions-Stufe ganz aushebeln.

Weiterhin kann Oscar mit dem vierten Angriffsszenario die erste bis dritte Detektions-Stufe vollständig umgehen (z.B. in Ruhephasen oder mit sehr gutem Timing).

Auch die dritte Stufe hat 0 % False Positives, wenn der korrekte Takt gefunden wird. Verwechslungen zwischen Angriffen Oscars und einem Busteilnehmer können, wie erwähnt, durch ein irreguläres Verhalten eines Busteilnehmers auftreten.

Die vierte Detektions-Stufe erkennt alle weiteren bekannten Angriffe. Da allerdings das vierte Angriffsszenario beispielsweise regulärem, aber sehr unwahrscheinlichem, Verhalten eines Busteilnehmers (Steuergeräts) entsprechen kann, kann es auch zu False Positives kommen. Allerdings ist die Wahrscheinlichkeit, dass viermal in Folge mehrere Zustandswechsel pro Zyklus getriggert werden, wobei die letzte Nachricht die alte CAN-Nachricht wiederholt, sehr gering ist.

Fig. 6a veranschaulicht die Kommunikationsregeln für CAN-Nachrichten eines vierten Nachrichtentyps. Auf der Abszisse der Fig. 6a ist wieder die Zeit (t) in Millisekunden (ms) aufgetragen, wobei im oberen Drittel der Fig. 6a Ereignisse s=0 bzw. s=1 gezeigt sind, in der Mitte CAN-Nachrichten als senkrechte Striche, die zyklisch mit einem festen Abstand ("cycle") von hier 60 ms gesendet und dementsprechend empfangen werden und im untersten Bereich der CAN-Nachrichteninhalt s=0 bzw. s=1. Bei CAN-Nachrichten des vierten Typs kann eine Aktualisierung eines Statusses geschehen, wobei bei einem Zustandswechsel, z.B. von s=0 zu s=1, eine Nachricht unmittelbar nach einer vorgegebenen Sperrzeit ausgesendet werden kann. Der Zustandswechsel wird durch eine kürzere Zyklusdauer angezeigt ("cylcefast"), wobei die neue CAN-Nachricht mehrfach mit der kürzeren Zyklusdauer wiederholt wird. Danach wird wieder die vorgegebene (alte) Zyklusdauer, hier 60 ms, eingehalten.

Als Parameter kann die IDS 5 die ID, Zyklusdauer, Sperrzeit, kürzere Zyklusdauer (schnell) und Wiederholungen derselben Nachricht sehen.

Bei CAN-Nachrichten des vierten Nachrichtentyps sind die Kommunikationsregeln derart, dass die CAN-Nachrichten des vierten Typs in regelmäßigen Abständen mit gleicher Zyklusdauer zur Zustands-Mitteilung ausgesendet werden. Es sind Zustandswechsel zu unregelmäßigen Zeiten möglich, wobei ein solcher Zustandswechsel durch mehrfaches Aussenden einer CAN-Nachricht mit aktualisiertem Nachrichteninhalt bei einem schnelleren Takt, d.h. mit kürzerer Zyklusdauer, angezeigt wird. Der originale Haupttakt mit der vorgegebenen Zyklusdauer wird nach Beendigung des Zustandswechsels neu begonnen.

Dies ist auch in den Fig. 6b-d dargestellt. Zunächst werden CAN-Nachrichten 50 mit einer Zyklusdauer 51 ausgesendet. Dann kommt eine CAN-Nachricht 50a, die nach einem Zeitabstand 51a nach einer CAN-Nachricht 50 ausgesendet wird, der deutlich kürzer als die Zyklusdauer 51 ist und die einen Zustandswechsel auslöst. Auf die CAN-Nachricht 50a folgen nach Ablauf der Sperrzeit 51b mehrere (hier fünf) CAN-Nachrichten 50b, die durch einen weiteren Zustandswechsel ausgelöst werden, wobei die CAN-Nachrichten 50b mit einer schnellen Zyklusdauer 51c gesendet werden, die deutlich kürzer als die vorherige Zyklusdauer 51 ist. Danach ist der Zustandswechsel abgeschlossen und die CAN-Nachrichten 50b werden wieder gemäß der vorgegebenen Zyklusdauer 51 ausgesendet, die quasi mit der letzten CAN-Nachricht 50b, die mit der kurzen Zyklusdauer 512c gesendet wurde, neu startet.

Fig. 6b veranschaulicht ein erstes Angriffsszenario, bei dem Oscar fortlaufend (siehe auch Fig. 3b, 4b, 5b), in geringem zeitlichen Abstand 53a, Angriffs-Nachrichten 52a mit der entsprechenden ID und dem gewünschten Nachrichteninhalt sendet.

Fig. 6c veranschaulicht ein zweites Angriffsszenario, bei dem Oscar immer direkt nach einer CAN-Nachricht 50, 50a, 50b eine Angriffs-Nachricht 52b mit der entsprechenden ID und dem gewünschten Nachrichteninhalt sendet und folglich die Sperrzeit 51b missachtet und unterschreitet (siehe auch Fig. 3c, 4c und 5c).

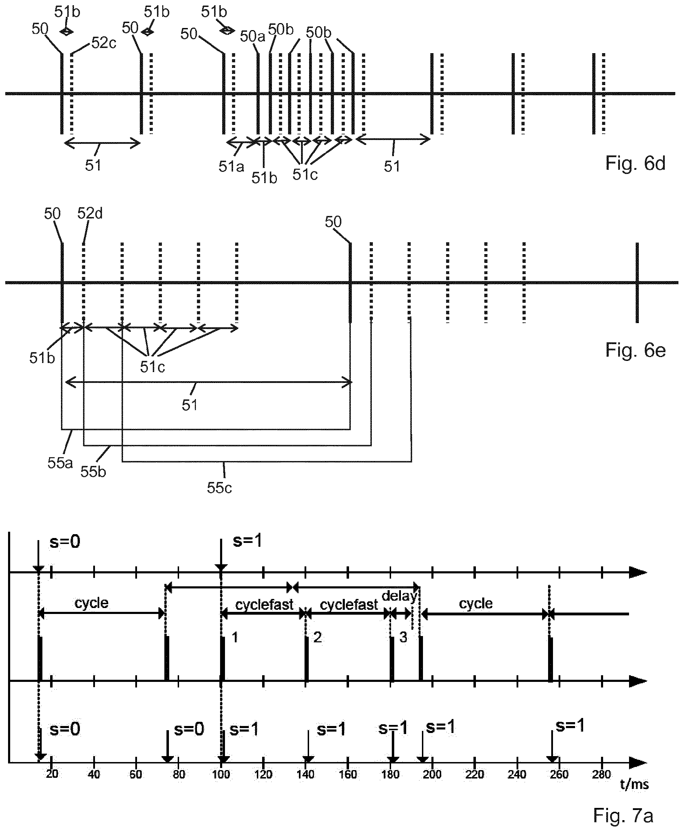

Fig. 6d veranschaulicht ein drittes Angriffsszenario, bei dem Oscar immer nach einer CAN-Nachricht 50, 50a, 50b eine Angriffs-Nachricht 52c mit der entsprechenden ID und dem gewünschten Nachrichteninhalt sendet, dabei aber die Sperrzeit 51b beachtet (siehe auch Fig. 4d und 5d).

Fig. 6e veranschaulicht ein viertes Angriffsszenario, bei dem Oscar das dritte Angriffsszenario durchführt und entsprechend Angriffs-Nachrichten 52d gemäß der schnellen Zyklusdauer 51c sendet, hier jeweils fünf Nachrichten. Bei einem Zustandswechsel greift Oscar nicht ein.

Das IDS 5 führt eine Detektion von Angriffen auf CAN-Nachrichten des vierten Typs basierend auf drei Stufen aus:
In einer ersten Stufe prüft das IDS 5 jeweils die Zeit zwischen zwei aufeinanderfolgenden CAN-Nachrichten mit identischen Nachrichteninhalt (z.B. Nutzdateninhalt). Stimmt diese Zeit nicht mit der Zyklusdauer 51 (innerhalb des Toleranzbereichs) überein, so wird eine Warnmeldung generiert. Wenn allerdings Nachrichtenwiederholungen nach einem Zustandswechsel aktiv sind, wird die schnelle Zyklusdauer 51c anstatt der normalen Zyklusdauer 51 geprüft. Dadurch können die Angriffsszenarien eins bis drei erkannt werden.

In einer zweiten Stufe prüft das IDS 5 jeweils die Zeit zwischen aufeinanderfolgenden Nachrichten des vierten Typs mit unterschiedlichem Nachrichteninhalt (z.B. Nutzdateninhalt). Liegt diese Zeit unterhalb der Sperrzeit 51b (abzüglich des Toleranzbereichs), so wird eine Warnmeldung generiert. Dadurch können die Angriffsszenarien eins und zwei erkannt werden.

In einer dritten Stufe erstellt das IDS 5 für jede CAN-Nachrichte eine Vorhersage, wann sie wiederholt wird, sofern es zu keinem Zustandswechsel kommt. Wird allerdings in der Zwischenzeit doch ein Zustandswechsel getriggert und die Vorhersage trifft trotzdem zu, ist dies ein verdächtiges Verhalten, wie es bei dem vierten Angriffsversuch der Fall ist (Fig. 5e). Bei dreimaligen verdächtigen Verhalten (siehe Klammern 55a, 55b und 55c) in einer kurzen Zeitspanne wird eine Warnmeldung generiert. Werden aufgrund des Zustandswechsels Nachrichten wiederholt gesendet, so wird neben der normalen Vorhersage für die normale Zyklusdauer 51 auch noch eine Vorhersage für die kurze Zyklusdauer 51c erstellt und ebenso geprüft. Dadurch können die Angriffsszenarien eins bis vier erkannt werden.

Die erste und die zweite Detektions-Stufe funktionieren exakt und können nicht umgangen werden, sodass eine Detektionsrate von 100% und eine False Positive Rate von 0% erreicht wird. Verwechslungen zwischen Angriffen Oscars und dem Fehlverhalten eines Busteilnehmers können, wie erwähnt, durch irreguläres Verhalten eines Senders vorliegen.

Die dritte Detektions-Stufe erkennt eine eingeschleuste Angriffs-Nachricht nur dann nicht, wenn im originalen Busverkehr danach ein Zustandswechsel getriggert wird. Um dies auszunutzen müsste Oscar in die Zukunft sehen können, was nur ginge, wenn Oscar Kontrolle bspw. über das IDS 5 hätte.

False Positives in der dritten Detektions-Stufe können durch unglückliches Timing vorkommen, wenn bspw. eine CAN-Nachricht, die gemäß der kurzen Zyklusdauer 51c ausgesendet wird, zufällig einen zeitlichen Abstand gemäß der normalen Zyklusdauer 51 zu einer vorherigen CAN-Nachricht hat.

Die Wahrscheinlichkeit für False Positives ist hier durch die doppelten Vorhersagen in Bereichen in denen gerade ein Zustandswechsel stattfindet und die dadurch bedingte Taktüberschattung etwas größer als bei Nachrichten des zweiten Typs. Allerdings ist die Wahrscheinlichkeit, dass ein derartiges Verhalten drei- oder viermal in Folge in kurzer Zeit auftritt, gering.

Fig. 7a veranschaulicht die Kommunikationsregeln für CAN-Nachrichten eines fünften Nachrichtentyps. Auf der Abszisse der Fig. 7a ist wieder die Zeit (t) in Millisekunden (ms) aufgetragen, wobei im oberen Drittel der Fig. 7a Ereignisse s=0 bzw. s=1 gezeigt sind, in der Mitte CAN-Nachrichten als senkrechte Striche, die zyklisch mit einem festen Abstand ("cycle") von hier 60 ms gesendet und dementsprechend empfangen werden und im untersten Bereich der CAN-Nachrichteninhalt s=0 bzw. s=1. Bei CAN-Nachrichten des fünften Typs kann eine Aktualisierung eines Statusses geschehen, wobei bei einem Zustandswechsel, z.B. von s=0 zu s=1, eine Nachricht mehrfach gemäß einer schnelle Zyklusdauer ("cycelfast") ausgesendet wird. Nach Beendigung des Zustandswechsels und Beachtung der vorgegebenen Sperrzeit ("delay") werden die CAN-Nachrichten in Übereinstimmung mit dem alten Rhythmus ausgesendet, das heißt der alte Takt mit einer Zyklusdauer von 60 ms läuft quasi im Hintergrund während des Zustandswechsel durch und wir dann wieder aufgenommen.

Als Parameter kann die IDS 5 die ID, Zyklusdauer, Sperrzeit, kürzere Zyklusdauer (schnell) und Wiederholungen derselben Nachricht sehen.

Bei CAN-Nachrichten des fünften Nachrichtentyps sind die Kommunikationsregeln derart, dass die CAN-Nachrichten des fünften Typs in regelmäßigen Abständen mit gleicher Zyklusdauer zur Zustands-Mitteilung ausgesendet werden. Es sind Zustandswechsel zu unregelmäßigen Zeiten möglich, wobei ein solcher Zustandswechsel durch mehrfaches Aussenden einer CAN-Nachricht bei einem schnelleren Takt, d.h. mit kürzerer Zyklusdauer, angezeigt wird. Der originale Haupttakt mit der vorgegebenen Zyklusdauer wird nach Beendigung des Zustandswechsels fortgesetzt.

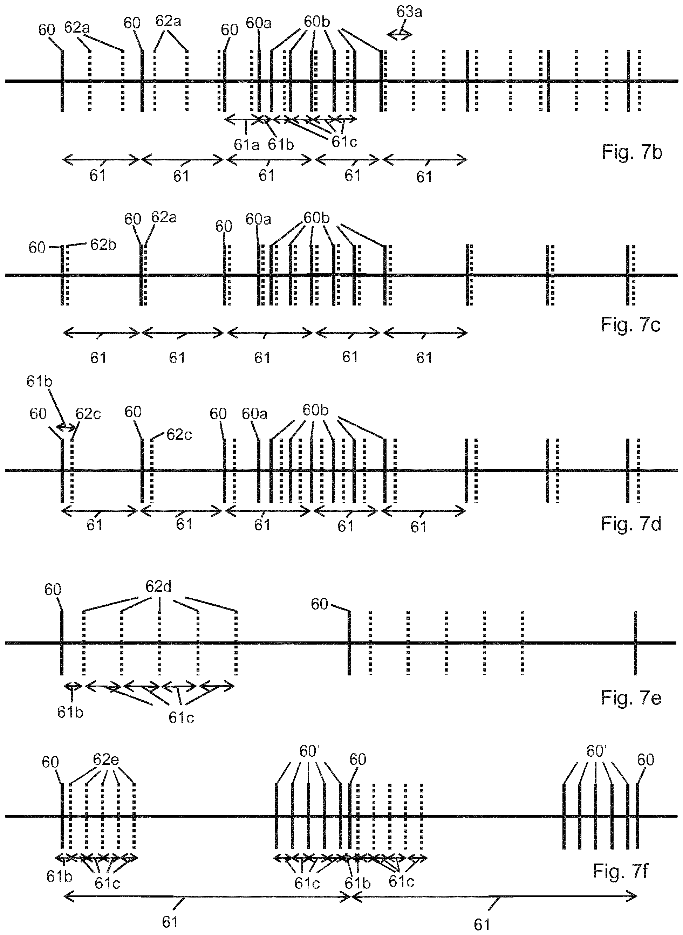

Dies ist auch in den Fig. 7b-f dargestellt. Zunächst werden CAN-Nachrichten 60 mit einer Zyklusdauer 61 ausgesendet. Dann kommt eine CAN-Nachricht 60a, die nach einem Zeitabstand 61a nach einer CAN-Nachricht 60 ausgesendet wird, der deutlich kürzer als die Zyklusdauer 61 ist und die einen Zustandswechsel auslöst. Auf die CAN-Nachricht 60a folgen nach Ablauf der Sperrzeit 61b mehrere (hier fünf) CAN-Nachrichten 60b, die durch einen weiteren Zustandswechsel ausgelöst werden, wobei die CAN-Nachrichten 60b mit einer schnellen Zyklusdauer 61c gesendet werden, die deutlich kürzer als die vorherige Zyklusdauer 61 ist. Danach ist der Zustandswechsel abgeschlossen und die CAN-Nachrichten 60b werden gemäße dem im Hintergrund durchlaufenden Rhythmus mit der vorgegebenen Zyklusdauer 61 ausgesendet.

Fig. 7b veranschaulicht ein erstes Angriffsszenario, bei dem Oscar fortlaufend (siehe auch Fig. 3b, 4b, 5b, 6b), in geringem zeitlichen Abstand 63a, Angriffs-Nachrichten 62a mit der entsprechenden ID und dem gewünschten Nachrichteninhalt sendet.

Fig. 7c veranschaulicht ein zweites Angriffsszenario, bei dem Oscar immer direkt nach einer CAN-Nachricht 60, 60a, 60b eine Angriffs-Nachricht 62b mit der entsprechenden ID und dem gewünschten Nachrichteninhalt sendet und folglich die Sperrzeit 61b missachtet und unterschreitet (siehe auch Fig. 3c, 4c, 5c, 6c).

Fig. 7d veranschaulicht ein drittes Angriffsszenario, bei dem Oscar immer nach einer CAN-Nachricht 60, 60a, 60b eine Angriffs-Nachricht 62c mit der entsprechenden ID und dem gewünschten Nachrichteninhalt sendet, dabei aber die Sperrzeit 61b beachtet (siehe auch Fig. 4d, 5d und 6d).

Fig. 7e veranschaulicht ein viertes Angriffsszenario, bei dem Oscar das dritte Angriffsszenario durchführt und entsprechend Angriffs-Nachrichten 62d gemäß der schnellen Zyklusdauer 61c sendet, hier jeweils fünf Nachrichten. Bei einem Zustandswechsel greift Oscar nicht ein.

Fig. 7f veranschaulicht ein fünftes Angriffsszenario, bei dem Oscar das vierte Angriffsszenario durchführt, aber wiederholt vor dem nächsten Takt die originale Nachricht mehrfach mit der schnellen Zyklusdauer wiederholt (hier fünfmal 60'). Er greift bei einem originalen Zustandswechsel nicht ein

Die Detektion von Angriffen auf CAN-Nachrichten des fünften Typs durch das IDS 5 basiert auf vier Stufen:
In der ersten Stufe prüft das IDS 5 jeweils die Zeit zwischen zwei aufeinanderfolgenden CAN-Nachrichten des fünften Typs mit identischem Nachrichteninhalt (z.B. Nutzdateninhalt), prüft jeweils die aktuelle Statusregel und erhöht den Status:
- Status 0: Sperrzeit muss eingehalten werden
- Status 1: Zyklusdauer muss eingehalten werden, kann aber verkürzt sein
- Status 2: Zyklusdauer muss eingehalten werden, Ausnahme: Wenn Wiederholungen nach einem Zustandswechsel aktiv sind, wird die kurze (schnelle) Zyklusdauer anstatt der normalen geprüft (ohne Status - immer absolut). Die erste Stufe erkennt die Angriffsszenarien eins bis drei.

In der zweiten Detektions-Stufe prüft das IDS 5 jeweils die Zeit zwischen zwei aufeinanderfolgenden CAN-Nachrichten des fünften Typs mit unterschiedlichem Nachrichteninhalt (z.B. Nutzdateninhalt). Liegt diese Zeit unterhalb der Sperrzeit (abzüglich des Toleranzbereichs), so wird eine Warnmeldung generiert. Die zweite Stufe erkennt die Angriffsszenarien eins und zwei.

In der dritten Stufe versucht das IDS 5 den Takt zu finden, wobei dies in der Ruhephase geschieht in der kein Zustandswechsel aktiv ist, und es erstellt eine Vorhersage, dass die Nachricht mit demselben Nachrichteninhalt zum nächsten Takt wiederholt wird. Wird ein Zustandswechsel getriggert, so wird der erwartete Nachrichteninhalt aktualisiert. Falls die Vorhersage nicht zutrifft, also nicht die letzte Nachricht wiederholt wird, so wird eine Warnmeldung generiert. Die dritte Stufe erkennt die Angriffsszenarien eins bis vier.

In der vierten Stufe prüft das IDS 5, ob während eines Taktzyklusses mehrere Zustandswechsel getriggert werden und die letzte Nachricht wieder die alte CAN-Nachricht mit identischem Nachrichteninhalt wiederholt. Sollte dies fünfmal in Folge passieren, wird eine Warnmeldung generiert. Die vierte Stufe erkennt Angriffsszenario fünf.

Die erste Detektions-Stufe 1 funktioniert exakt, sobald Status 1 eingetreten ist. In Status 0 kann Oscar nach einem Zustandswechsel-Ereignis für den Rest der Zyklusdauer Nachrichten einschleusen, sofern kein weiterer Zustandswechsel auftritt. Allerdings ist die Gefahr, dass dies Oscar gelingt, durch die anderen vorgesehen Stufen und gegebenen Rahmenbedingungen sehr gering. Die False Positives Rate beträgt 0%. Verwechslungen können, wie erwähnt, durch ein irreguläres Verhalten eines Senders auftreten.

Die zweite Detektions-Stufe 2 funktioniert exakt und hat eine 100% Detektionsrate und eine 0% False Positives Rate. Verwechslungen können, wie erwähnt, durch ein irreguläres Verhalten eines Senders auftreten.

Die dritte Detektions-Stufe hilft zuverlässig gegen mehrere Angriffe, kann allerdings Schwächen haben. Ist Oscar bspw. von Anfang an präsent, kann er verhindern, dass ein Takt gefunden wird und die Detektion ganz aushebeln, indem er entsprechend Nachrichten sendet. Weiterhin kann Oscar mit dem fünften Angriffsszenario die erste bis dritte Detektions-Stufe vollständig umgehen (in Ruhephasen ohne Zustandswechsel). Wird allerdings der korrekte Takt gefunden, so beträgt die False Positives Rate 0%. Verwechslungen können, wie erwähnt, durch ein irreguläres Verhalten eines Senders auftreten.

Die vierte Detektions-Stufe erkennt alle weiteren bekannten Angriffe durch Oscar. Da allerdings das fünfte Angriffsszenario einem regulärem (aber sehr unwahrscheinlichen) Verhalten eines Busteilnehmers entspricht, kann es auch zu False Positives kommen. Allerdings ist die Wahrscheinlichkeit, dass fünfmal in Folge mehrere Zustandswechsel pro Takt getriggert werden, wobei die letzte CAN-Nachricht die alte Nachricht vor dem Zustandswechsel wiederholt, sehr gering.

### Bezugszeichenliste

- 1: Bussystem für Kraftfahrzeug
- 2a,2b: Busleitungen
- 3a-3d: Busteilnehmer (nicht sicherheitskritisch)
- 4a-d: Busteilnehmer (sicherheitskritisch)
- 5: IDS, Angriffserkennungsvorrichtung
- 6: Mikroprozessor
- 7: Speicher
- 8: Schnittstelle
- 10: Angriffserkennungsverfahren
- 11: Nachrichtenempfangsschritt
- 12: Analyseschritt
- 13: Ausgeben einer Nachricht
- 20: CAN-Nachricht erster Typ
- 21: Zyklusdauer von 20
- 22a,b: Angriffs-Nachrichten
- 23a,b: Zyklusdauer Angriffs-Nachrichten
- 30,a,b: CAN-Nachricht zweiter Typ
- 31: Zyklusdauer von 30
- 31a: Zeitabstand
- 31b: Sperrzeit
- 32a,b,c: Angriffs-Nachrichten
- 33a: Zyklusdauer Angriffs-Nachrichten
- 35a-c: verdächtiges Verhalten
- 36a-c: verdächtiges Verhalten
- 40,a,b: CAN-Nachricht dritter Typ
- 40', 40b': Nachrichtenkopie von 40, 40b
- 41: Zyklusdauer von 40
- 41a: Zeitabstand
- 41b: Sperrzeit
- 42a,b,c,d: Angriffs-Nachrichten
- 43a: Zyklusdauer Angriffs-Nachrichten
- 50,a,b: CAN-Nachricht vierter Typ
- 51: Zyklusdauer von 50
- 51a: Zeitabstand
- 51b: Sperrzeit
- 51c: kurze Zyklusdauer
- 52a,b,c,d: Angriffs-Nachrichten
- 53a: Zyklusdauer Angriffs-Nachrichten
- 55a,b,c: verdächtiges Verhalten
- 60,a,b: CAN-Nachricht fünfter Typ
- 60': Nachrichtenkopie von 60
- 61: Zyklusdauer von 60
- 61a: Zeitabstand
- 61b: Sperrzeit
- 61c: kurze Zyklusdauer
- 62a,b,c,d,e: Angriffs-Nachrichten
- 63a: Zyklusdauer Angriffs-Nachrichten

## Patentansprüche

1. Angriffserkennungsverfahren für ein Bussystem (1) eines Kraftfahrzeugs, wobei für das Bussystem Kommunikationsregeln für das Senden von Nachrichten (20, 30, 30a-b, 40, 40a-b, 50, 50a-b, 60, 60a-b) festgelegt sind, umfassend:
Empfangen (11) von Nachrichten (20, 30, 30a-b, 40, 40a-b, 50, 50a-b, 60, 60a-b; 22a-b, 32a-c, 42a-d, 52a-d, 62a-e), die über das Bussystem (1) geschickt werden; und
Analysieren (12), ob die empfangenen Nachrichten gemäß den Kommunikationsregeln empfangen werden,
**dadurch gekennzeichnet, dass**
die Kommunikationsregeln eine Sperrzeit (31b, 41b, 51b, 61b) zwischen zwei aufeinanderfolgenden Nachrichten (30a, 30b, 40a, 40b, 50a, 50b, 60a, 60b) vorgeben und
das Analysieren umfasst, ob zwei aufeinanderfolgende Nachrichten (30a, 30b, 40a, 40b, 50a, 50b, 60a, 60b) gemäß der vorgegebenen Sperrzeit (31b, 41b, 51b, 61b) empfangen werden; und dass
die Kommunikationsregeln in Abhängigkeit eines vorgegebenen Ereignisses einen Wechsel eines Nachrichtenzyklusses (51, 61) vorgeben und das Analysieren umfasst, ob die empfangenen Nachrichten (50, 50a-b, 60, 60a-b; 52a-d, 62a-e) gemäß dem vorgegebenen Wechsel des Nachrichtenzyklusses (51, 61) empfangen werden.

2. Angriffserkennungsverfahren nach Anspruch 1, wobei für unterschiedliche Nachrichtentypen (20, 30, 30a-b, 40, 40a-b, 50, 50a-b, 60, 60a-b) unterschiedliche Kommunikationsregeln festgelegt sind und Nachrichten eines bestimmten Nachrichtentyps analysiert werden.

3. Angriffserkennungsverfahren nach einem der vorhergehenden Ansprüche, wobei die Kommunikationsregeln einen festen Nachrichtenübertragungszyklus (21, 31, 41, 51, 61) vorgeben und das Analysieren umfasst, ob die Nachrichten (20, 30, 30a-b, 40, 40a-b, 50, 50a-b, 60, 60a-b; 22a-b, 32a-c, 42a-d, 52a-d, 62a-e) gemäß dem festen Nachrichtenübertragungszyklus (21, 31, 41, 51, 61) empfangen wurden.

4. Angriffserkennungsverfahren nach Anspruch 1, wobei das Analysieren umfasst, ob der Nachrichteninhalt zwei aufeinanderfolgender Nachrichten (30a, 30b, 40a, 40b, 50a, 50b, 60a, 60b) identisch ist.

5. Angriffserkennungsverfahren nach einem der vorhergehenden Ansprüche, wobei die Kommunikationsregeln in Abhängigkeit eines vorgegebenen Ereignisses eine Änderung einer Nachrichtenzyklusdauer (51, 61) vorgeben und das Analysieren umfasst, ob die empfangenen Nachrichten (50, 50a-b, 60, 60a-b; 52a-d, 62a-e) gemäß der vorgegebenen Änderung der Nachrichtenzyklusdauer (51, 61) empfangen werden.

6. Angriffserkennungsverfahren nach einem der vorhergehenden Ansprüche, wobei die Kommunikationsregeln in Abhängigkeit eines vorgegebenen Ereignisses einen Neustart eines Nachrichtenzyklusses (31, 51) vorgeben und das Analysieren umfasst, ob die empfangenen Nachrichten (30, 30a-b, 50, 50a-b; 32a-c, 52a-d) gemäß dem Neustart des Nachrichtenzyklusses (31, 51) empfangen werden.

7. Angriffserkennungsverfahren nach Anspruch 6, wobei das Analysieren umfasst, ob die empfangenen Nachrichten (30, 30a-b, 50, 50a-b; 32a-c, 52a-d) vor und nach dem Neustart des Nachrichtenzyklusses (31, 51) denselben Nachrichteninhalt haben.

8. Angriffserkennungsverfahren nach einem der vorhergehenden Ansprüche, wobei die Kommunikationsregeln einen ersten Nachrichtenzyklus (51, 61) und einen zweiten Nachrichtenzyklus (51c, 61c) vorgeben, wobei der zweite Nachrichtenzyklus (51c, 61c) kürzer als der erste Nachrichtenzyklus (51, 61) ist, wobei Nachrichten (50a,b, 60a,b) gemäß dem zweiten Nachrichtenzyklus (51c, 61c) zum Anzeigen eines Zustandswechsels gesendet werden, wobei nach Beendigung des zweiten Nachrichtenzyklusses (51c, 61c) Nachrichten (50b, 50b) gemäß dem ersten Nachrichtenzyklus (51, 61) gesendet werden und wobei das Analysieren umfasst, ob die Nachrichten (50, 50a-b, 60, 60a-b; 52a-d, 62a-e) entsprechend diesen Kommunikationsregeln empfangen werden.

9. Angriffserkennungsverfahren nach einem der vorhergehenden Ansprüche, wobei die Kommunikationsregeln vorgeben, dass ein Nachrichtenzyklus (51, 61) und ein Nachrichteninhalt eines vorgegebenen Nachrichtentyps in Abhängigkeit eines bestimmten Ereignisses geändert werden und wobei das Analysieren umfasst, ob der Nachrichteninhalt des Nachrichtentyps unverändert bleibt.

10. Angriffserkennungsverfahren nach einem der vorhergehenden Ansprüche, zusätzlich das Ausgeben (13) einer Nachricht umfassend, wenn die Nachrichten (20, 30, 30a-b, 40, 40ab, 50, 50a-b, 60, 60a-b; 22a-b, 32a-c, 42a-d, 52a-d, 62a-e) nicht gemäß den Kommunikationsregeln empfangen wurden.

11. Angriffserkennungsverfahren nach Anspruch 10, wobei die Nachricht ausgegeben wird, wenn eine vorgegebene Anzahl von Nachrichten (20, 30, 30a-b, 40, 40a-b, 50, 50a-b, 60, 60a-b; 22a-b, 32a-c, 42a-d, 52a-d, 62a-e) nicht gemäß den Kommunikationsregeln empfangen wird.

12. Angriffserkennungsvorrichtung für ein Bussystem (1) für ein Kraftfahrzeug mit einem Mikroprozessor (6), wobei die Angriffserkennungsvorrichtung dazu eingerichtet ist, Nachrichten (20, 30, 30a-b, 40, 40a-b, 50, 50a-b, 60, 60a-b; 22a-b, 32a-c, 42a-d, 52a-d, 62a-e) über das Bussystem (1) zu empfangen und der Mikroprozessor (6) dazu eingerichtet ist, das Verfahren nach einem der vorhergehenden Ansprüche auszuführen.

13. Bussystem für ein Kraftfahrzeug mit wenigstens einer Busleitung (2a, 2b) und mehreren Busteilnehmern (3a-d, 4a-d, 5), die über die Busleitung (2a, 2b) miteinander Nachrichten (20, 30, 30a-b, 40, 40a-b, 50, 50a-b, 60, 60a-b; 22a-b, 32a-c, 42a-d, 52a-d, 62a-e) austauschen, wobei wenigstens ein Busteilnehmer (5) dazu eingerichtet ist, das Verfahren nach einem der Ansprüche 1 bis 11 auszuführen.

## Claims

1. Attack detection method for a bus system (1) of a motor vehicle, wherein for the bus system, communication rules are defined for the transmission of messages (20, 30, 30a-b, 40, 40a-b, 50, 50a-b, 60, 60a-b), comprising:
receiving (11) messages (20, 30, 30a-b, 40, 40a-b, 50, 50a-b, 60, 60a-b; 22a-b, 32a-c, 42a-d, 52a-d, 62a-e), which are sent via the bus system (1); and
analyzing (12) whether the received messages are received according to the communication rules, **characterized in that**
the communication rules predefine a blocking time (31b, 41b, 51b, 61b) between two consecutive messages (30a, 30b, 40a, 40b, 50a, 50b, 60a, 60b) and the analysis determines whether two consecutive messages (30a, 30b, 40a, 40b, 50a, 50b, 60a, 60b) are received according to the predefined blocking time (31b, 41b, 51b, 61b); and
**in that** the communication rules predefine a changeover of a message cycle (51, 61) depending on a predefined event and the analysis determines whether the received messages (50, 50a-b, 60, 60a-b; 52a-d, 62a-e) are received according to the predefined changeover of the message cycle (51, 61).

2. Attack detection method according to Claim 1, wherein different communication rules are defined for different message types (20, 30, 30a-b, 40, 40a-b, 50, 50a-b, 60, 60a-b) and messages of a specific message type are analyzed.

3. Attack detection method according to one of the preceding claims, wherein the communication rules predefine a fixed message transmission cycle (21, 31, 41, 51, 61) and the analysis determines whether the messages (20, 30, 30a-b, 40, 40a-b, 50, 50a-b, 60, 60a-b; 22a-b, 32a-c, 42a-d, 52a-d, 62a-e) have been received according to the fixed message transmission cycle (21, 31, 41, 51, 61) .

4. Attack detection method according to Claim 1, wherein the analysis determines whether the message content of two consecutive messages (30a, 30b, 40a, 40b, 50a, 50b, 60a, 60b) is identical.

5. Attack detection method according to one of the preceding claims, wherein the communications rules predefine a change in a message cycle duration (51, 61) depending on a predefined event and the analysis determines whether the received messages (50, 50a-b, 60, 60a-b; 52a-d, 62a-e) are received according to the predefined change in the message cycle duration (51, 61).

6. Attack detection method according to one of the preceding claims, wherein the communication rules predefine a restart of a message cycle (31, 51) depending on a predefined event, and the analysis determines whether the received messages (30, 30a-b, 50, 50a-b; 32a-c, 52a-d) are received according to the restart of the message cycle (31, 51).

7. Attack detection method according to Claim 6, wherein the analysis determines whether the received messages (30, 30a-b, 50, 50a-b; 32a-c, 52a-d) have the same message content before and after the restart of the message cycle (31, 51).

8. Attack detection method according to one of the preceding claims, wherein the communication rules predefine a first message cycle (51, 61) and a second message cycle (51c, 61c), wherein the second message cycle (51c, 61c) is shorter than the first message cycle (51, 61), wherein messages (50a,b, 60a,b) are transmitted according to the second message cycle (51c, 61c) to indicate a change of state, wherein, at the end of the second message cycle (51c, 61c), messages (50b, 50b) are transmitted according to the first message cycle (51, 61), and wherein the analysis determines whether the messages (50, 50a-b, 60, 60a-b; 52a-d, 62a-e) are received according to these communication rules.

9. Attack detection method according to one of the preceding claims, wherein the communication rules predefine that a message cycle (51, 61) and a message content of a predefined message type are changed depending on a specific event, and wherein the analysis determines whether the message content of the message type remains unchanged.

10. Attack detection method according to one of the preceding claims, additionally comprising the output (13) of a message if the messages (20, 30, 30a-b, 40, 40a-b, 50, 50a-b, 60, 60a-b; 22a-b, 32a-c, 42a-d, 52a-d, 62a-e) have not been received according to the communication rules.

11. Attack detection method according to Claim 10, wherein the message is output if a predefined number of messages (20, 30, 30a-b, 40, 40a-b, 50, 50a-b, 60, 60a-b; 22a-b, 32a-c, 42a-d, 52a-d, 62a-e) are not received according to the communication rules.

12. Attack detection device for a bus system (1) for a motor vehicle with a microprocessor (6), wherein the attack detection device is configured to receive messages (20, 30, 30a-b, 40, 40a-b, 50, 50a-b, 60, 60a-b; 22a-b, 32a-c, 42a-d, 52a-d, 62a-e) via the bus system (1) and the microprocessor (6) is configured to carry out the method according to one of the preceding claims.

13. Bus system for a motor vehicle with at least one bus line (2a, 2b) and a plurality of bus participants (3a-d, 4a-d, 5) which exchange messages (20, 30, 30a-b, 40, 40a-b, 50, 50a-b, 60, 60a-b; 22a-b, 32a-c, 42a-d, 52a-d, 62a-e) with one another via the bus line (2a, 2b), wherein at least one bus participant (5) is configured to carry out the method according to one of Claims 1 to 11.

## Revendications

1. Procédé de reconnaissance d'attaque pour un système de bus (1) d'un véhicule automobile, des règles de communication pour l'émission de messages (20, 30, 30a-b, 40, 40a-b, 50, 50a-b, 60, 60a-b) étant fixées pour le système de bus, comprenant :
réception (11) de messages (20, 30, 30a-b, 40, 40a-b, 50, 50a-b, 60, 60a-b ; 22a-b, 32a-c, 42a-d, 52a-d, 62a-e) qui sont envoyés par le biais du système de bus (1) ; et
analyse (12) si les messages reçus sont reçus conformément aux règles de communication,
**caractérisé en ce que**
les règles de communication prédéfinissent un temps de blocage (31b, 41b, 51b, 61b) entre deux messages (30a, 30b, 40a, 40b, 50a, 50b, 60a, 60b) successifs et l'analyse comprenant la vérification si les deux messages (30a, 30b, 40a, 40b, 50a, 50b, 60a, 60b) successifs sont reçus conformément au temps de blocage (31b, 41b, 51b, 61b) prédéfini ; et **en ce que**
les règles de communication prédéfinissent un changement d'un cycle de message (51, 61) en fonction d'un événement prédéfini et l'analyse comprend la vérification si les messages (50, 50a-b, 60, 60a-b ; 52a-d, 62a-e) reçus sont reçus conformément au changement prédéfini du cycle de message (51, 61).

2. Procédé de reconnaissance d'attaque selon la revendication 1, des règles de communication différentes étant fixées pour différents types de messages (20, 30, 30a-b, 40, 40a-b, 50, 50a-b, 60, 60a-b) et les messages d'un type de message déterminé étant analysés.

3. Procédé de reconnaissance d'attaque selon l'une des revendications précédentes, les règles de communication prédéfinissant un cycle de transmission de message (21, 31, 41, 51, 61) fixe et l'analyse comprenant la vérification si les messages (20, 30, 30a-b, 40, 40a-b, 50, 50a-b, 60, 60a-b ; 22a-b, 32a-c, 42a-d, 52a-d, 62a-e) sont reçus conformément au cycle de transmission de message (21, 31, 41, 51, 61) fixe.

4. Procédé de reconnaissance d'attaque selon la revendication 1, l'analyse comprenant la vérification si le contenu de message de deux messages (30a, 30b, 40a, 40b, 50a, 50b, 60a, 60b) successifs est identique.

5. Procédé de reconnaissance d'attaque selon l'une des revendications précédentes, les règles de communication prédéfinissant une modification d'une durée de cycle de message (51, 61) en fonction d'un événement prédéfini et l'analyse comprenant la vérification si les messages (50, 50a-b, 60, 60a-b ; 52a-d, 62a-e) reçus sont reçus conformément à la modification prédéfinie de la durée de cycle de message (51, 61).

6. Procédé de reconnaissance d'attaque selon l'une des revendications précédentes, les règles de communication prédéfinissant un redémarrage d'un cycle de message (31, 51) en fonction d'un événement prédéfini et l'analyse comprenant la vérification si les messages (30, 30a-b, 50, 50a-b ; 32a-c, 52a-d) reçus sont reçus conformément au redémarrage du cycle de message (31, 51).

7. Procédé de reconnaissance d'attaque selon la revendication 6, l'analyse comprenant la vérification si les messages (30, 30a-b, 50, 50a-b ; 32a-c, 52a-d) reçus possèdent le même contenu de message avant et après le redémarrage du cycle de message (31, 51).

8. Procédé de reconnaissance d'attaque selon l'une des revendications précédentes, les règles de communication prédéfinissant un premier cycle de message (51, 61) et un deuxième cycle de message (51c, 61c), le deuxième cycle de message (51c, 61c) étant plus court que le premier cycle de message (51, 61), des messages (50a, b, 60a, b) selon le deuxième cycle de message (51c, 61c) étant envoyés pour indiquer un changement d'état, des messages (50b, 50b) selon le premier cycle de message (51c, 61c) étant envoyés après la fin du premier cycle de message (51, 61) et l'analyse comprenant la vérification si les messages (50, 50a-b, 60, 60a-b ; 52ad, 62a-e) sont reçus conformément à ces règles de communication.

9. Procédé de reconnaissance d'attaque selon l'une des revendications précédentes, les règles de communication prédéfinissant qu'un cycle de message (51, 61) et un contenu de message d'un type de message prédéfini sont modifiés en fonction d'un événement déterminé et l'analyse comprenant la vérification si le contenu de message du type de message reste inchangé.

10. Procédé de reconnaissance d'attaque selon l'une des revendications précédentes, comprenant en plus la délivrance (13) d'un message lorsque les messages (20, 30, 30a-b, 40, 40a-b, 50, 50a-b, 60, 60a-b ; 22a-b, 32a-c, 42a-d, 52a-d, 62a-e) n'ont pas été reçus conformément aux règles de communication.

11. Procédé de reconnaissance d'attaque selon la revendication 10, le message étant délivré lorsqu'un nombre prédéfini de messages (20, 30, 30a-b, 40, 40a-b, 50, 50a-b, 60, 60a-b ; 22a-b, 32a-c, 42a-d, 52a-d, 62a-e) n'est pas reçu conformément aux règles de communication.

12. Dispositif de reconnaissance d'attaque pour un système de bus (1) d'un véhicule automobile comprenant un microprocesseur (6), le dispositif de reconnaissance d'attaque étant conçu pour recevoir des messages (20, 30, 30a-b, 40, 40a-b, 50, 50a-b, 60, 60a-b ; 22a-b, 32a-c, 42a-d, 52a-d, 62a-e) par le biais du système de bus (1) et le microprocesseur (6) étant conçu pour mettre en œuvre le procédé selon l'une des revendications précédentes.

13. Système de bus pour un véhicule automobile comprenant au moins une ligne de bus (2a, 2b) et plusieurs périphériques de bus (3a-d, 4a-d, 5), lesquels échangent des messages (20, 30, 30a-b, 40, 40a-b, 50, 50a-b, 60, 60a-b ; 22a-b, 32a-c, 42a-d, 52a-d, 62a-e) entre eux par le biais de la ligne de bus (2a, 2b), au moins un périphérique de bus (5) étant conçu pour mettre en œuvre le procédé selon l'une des revendications 1 à 11.
